# EUROPEAN PATENT SPECIFICATION

(11) **EP 2 869 379 B1**
(45) Date of publication and mention of the grant of the patent: **13.11.2019**
(21) Application number: 13810600.0
(22) Date of filing: 16.04.2013
(51) Int. Cl.: H01M 8/0612, H01M 8/04029, H01M 8/04007, H01M 8/04119, H01M 8/0444, H01M 8/04664, H01M 8/04791, H01M 8/124, H01M 8/04291

(54) **SOLID OXIDE FUEL CELL SYSTEM**
FESTOXID-BRENNSTOFFZELLENSYSTEM
SYSTÈME DE PILE À COMBUSTIBLE À OXYDE SOLIDE

(30) Priority: 28.06.2012 JP 2012145875
(43) Date of publication of application: 06.05.2015
(73) Proprietor: Panasonic Intellectual Property Management Co., Ltd., Osaka-shi, Osaka 540-6207 (JP)
(72) Inventor: MARUYAMA, Takehiro, Osaka-shi Osaka 540-6207 (JP); KOBAYASHI, Susumu, Osaka-shi Osaka 540-6207 (JP); UKAI, Kunihiro, Osaka-shi Osaka 540-6207 (JP)
(74) Representative: Grünecker Patent- und Rechtsanwälte PartG mbB
(86) International application number: PCT/JP2013/002561
(87) International publication number: WO 2014/002345

(56) References cited:
- WO-A1-01/28016
- WO-A1-2006/088053
- WO-A1-2006/137390
- WO-A1-2011/067927
- JP-A- 2002 141 095
- JP-A- 2004 311 451
- JP-A- 2005 129 237
- JP-A- 2005 158 501
- JP-A- 2005 276 757
- JP-A- 2005 317 405
- JP-A- 2006 093 157
- JP-A- 2009 140 695
- JP-A- 2012 104 321
- US-A1- 2003 027 025
- US-A1- 2009 176 134

## Description

### Technical Field

The present invention relates to a solid oxide fuel cell system. More particularly, the present invention relates to a solid oxide fuel cell system including a reformer configured to generate a hydrogen-containing gas by using humidified air and a raw material.

### Background Art

WO 2011/067927 A1 discloses a solid oxide fuel cell system comprising a reformer configured to generate a hydrogen-containing gas by using a raw material and water; a solid oxide fuel cell including an anode and a cathede, and configured to generate electric power by using the hydrogen-containing gas supplied from the reformer to the anode and air supplied to the cathode; a heat radiator configured to radiate heat from at least one of an anode off-gas discharged from the anode and a combustion exhaust gas generated by combusting the anode off-gas to generate condensed water; a condensed water circulating passage configured to circulate the condensed water supplied from the heat radiator: a condensed water tank provided with a condensed water circulating passage and configured to store the condensed water therein, a condensed water pump provided on the condensed water circulating passage and configured to circulate the condensed water and a reforming water pump configured to supply to the reformer the condensed water as at least a part of the water supplied to the reformer.

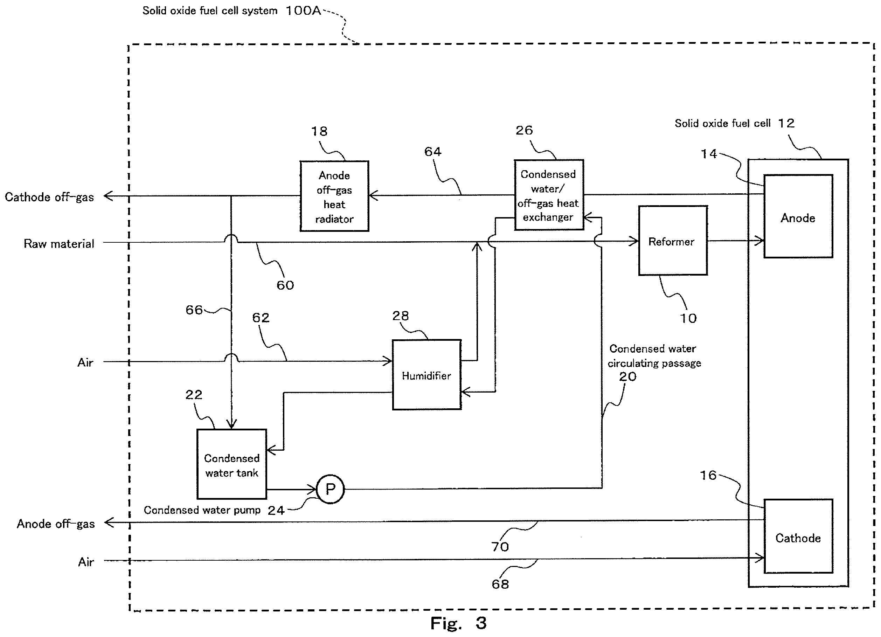

Patent Literature 1 discloses a fuel cell system including a condenser which condenses a steam contained in a gas discharged from an anode to generate liquid water (Fig. 3). This fuel cell system may be configured as a solid oxide fuel cell system (column 4: line 52-56).

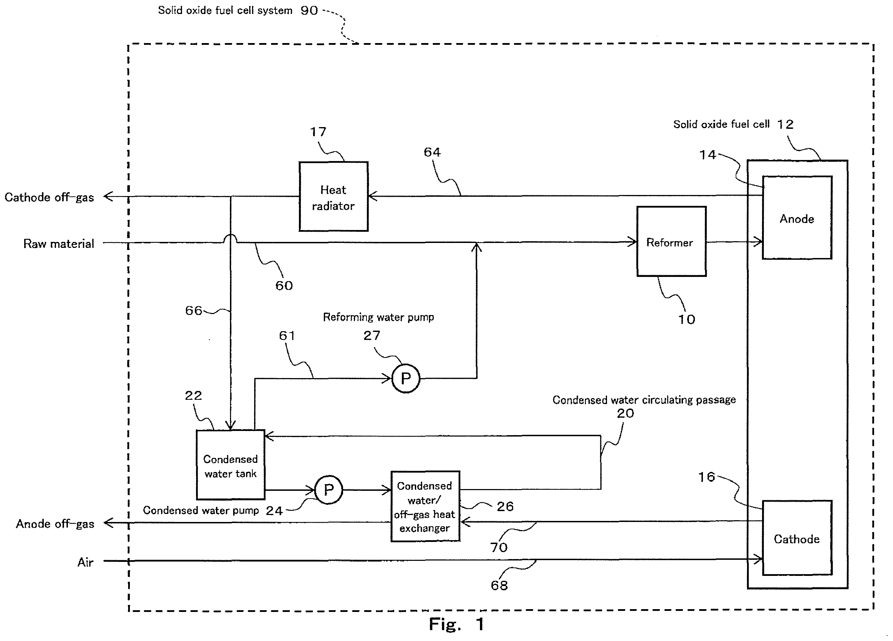

Patent Literature 2 discloses a solid oxide fuel cell system including an oxidation (oxidization) air humidification means which humidifies partial oxidation air which is supplied to a partial oxidation unit so that its temperature becomes equal to or higher than a dew point of 80 degrees C by causing the partial oxidation air to contact humidification water heated by utilizing exhaust heat generated in a solid oxide fuel cell (abstract, Fig. 1). The partial oxidation unit generates a reducing gas containing hydrogen by causing a desulfurized fuel gas to go through partial oxidation in the presence of an oxidation catalyst (claim 1). The humidification water is supplied from a clean water supply source. The water discharged from the humidification means is stored in a hot water storage tank (Fig. 1).

### Citation List

### Patent Literature

Patent Literature 1: US Patent Publication No. 7858256 specification
Patent Literature 2: Japanese Laid-Open Patent Application Publication No. 2005-317489

### Summary of Invention

### Technical Problem

In an environment in which infrastructure for supplying clean water is inadequate and an air temperature tends to rise, it was difficult for a conventional fuel cell system to supply electric power stably.

The present invention addresses the above described problem associated with a prior art, and an object is to provide a fuel cell system which is capable of supplying electric power more stably than a conventional fuel cell system is, in an environment in which infrastructure for supplying clean water is inadequate and an air temperature tends to rise.

Another object of the present invention is to supply reforming water stably while efficiently utilizing energy, in a solid oxide fuel cell system in which a moisture contained in a gas discharged from the solid oxide fuel cell system is recovered and used for reforming a raw material.

### Solution to Problem

The above and other objects of the invention are achieved by the solid oxide fuel cell system according to claim 1. Preferred embodiments are claimed in the dependent claims.

### Advantageous Effects of Invention

According to an aspect of the present invention, it becomes possible to achieve an advantage that reforming water can be supplied stably while efficiently utilizing energy, in a solid oxide fuel cell system in which a moisture contained in a gas discharged from the solid oxide fuel cell system is recovered and used for reforming a raw material.

According to another aspect of the present invention, it becomes possible to achieve an advantage that electric power can be supplied more stably than in a conventional example, in an environment in which infrastructure for supplying clean water is inadequate and an air temperature tends to rise.

### Brief Description of Drawings

Fig. 1 is a block diagram showing the exemplary schematic configuration of a solid oxide fuel cell system according to Embodiment 1.
Fig. 2 is a block diagram showing the exemplary schematic configuration of a solid oxide fuel cell system according to Embodiment 2.
Fig. 3 is a block diagram showing the exemplary schematic configuration of a solid oxide fuel cell system according to a modified example of Embodiment 2.
Fig. 4 is a block diagram showing the exemplary schematic configuration of a solid oxide fuel cell system according to Embodiment 3.
Fig. 5 is a block diagram showing the exemplary schematic configuration of a solid oxide fuel cell system according to Embodiment 4.
Fig. 6 is a block diagram showing the exemplary schematic configuration of a solid oxide fuel cell system according to a modified example of Embodiment 4.
Fig. 7 is a block diagram showing the exemplary schematic configuration of a solid oxide fuel cell system according to Embodiment 5.
Fig. 8 is a block diagram showing the exemplary schematic configuration of a solid oxide fuel cell system according to Embodiment 6.
Fig. 9 is a block diagram showing the exemplary schematic configuration of a solid oxide fuel cell system according to Embodiment 7.
Fig. 10 is a block diagram showing the exemplary schematic configuration of a solid oxide fuel cell system according to Embodiment 8.
Fig. 11 is a block diagram showing the exemplary schematic configuration of a solid oxide fuel cell system according to Embodiment 9.

### Description of Embodiments

The inventors intensively studied to supply reforming water stably while efficiently utilizing energy, in a fuel cell system in which a moisture contained in a gas discharged from a fuel cell system is recovered and used for reforming a raw material, and as a result, found out the followings.

In a case where the moisture contained in the gas discharged from the fuel cell system is stored as condensed water, germs and others may breed within a condensed water passage, and cause a problem such as clogging of a pump which supplies the condensed water to a reformer. The problem such as clogging may lead to a situation in which the reforming water is supplied unstably.

In light of the above, the inventors conceived that a condensed water pump circulates the condensed water in a condensed water circulating passage, and a condensed water/off-gas heat exchanger for exchanging heat between the condensed water and an off-gas discharged from a solid oxide fuel cell is provided in order to heat the condensed water by the off-gas. In this configuration, breeding of the germs and the like can be suppressed by heating the condensed water, and exhaust heat energy can be efficiently utilized by heating the condensed water by the off-gas.

Also, the inventors intensively studied to develop a solid oxide fuel cell system which is capable of supplying electric power more stably than a conventional solid oxide fuel cell system is, in an environment in which infrastructure for supplying clean water is inadequate and an air temperature tends to rise to about 50 degrees C, and they found out the followings.

In a case where water supply cannot depend on infrastructure, the water may be recovered from an off-gas discharged from a fuel cell. In the solid oxide fuel cell system, the dew point of an anode off-gas is as high as, for example, about 80 degrees C. Therefore, if the condensed water can be recovered from the anode gas, the condensed water with a sufficient amount can be recovered even when the air temperature is as high as, for example, 50 degrees C.

However, in a case where the recovered condensed water is supplied by a pump and the like to an evaporator and the evaporator evaporates the water as in a conventional method, there is a need for a pump which is capable of supplying the water with a small amount stably to the evaporator. Such a pump is expensive and maintenance of the pump is difficult.

Under the above circumstances, the inventors conceived that the condensed water is heated by the off-gas discharged from the fuel cell, the resulting hot water is circulated to humidify the air, and the humidified air is supplied to the reformer, instead of evaporating the water and supplying the evaporated water to the reformer. In this configuration, the supply amount of the steam can be controlled properly based on the temperature, circulation amount and the like of the condensed water. Therefore, it becomes possible to supply electric power more stably than in a conventional example, in an environment in which infrastructure for supplying clean water is inadequate and an air temperature tends to rise to about 50 degrees C. Note that the raw material may be humidified in addition to the air.

### (Embodiment 1)

According to Embodiment 1, there is provided a solid oxide fuel cell system comprising a reformer configured to generate a hydrogen-containing gas by using a raw material and water; a solid oxide fuel cell including an anode and a cathode, and configured to generate electric power by using the hydrogen-containing gas supplied from the reformer to the anode and air supplied to the cathode; a heat radiator configured to radiate heat from at least one of an anode off-gas discharged from the anode and a combustion exhaust gas generated by combusting the anode off-gas to generate condensed water; a condensed water circulating passage configured to circulate the condensed water supplied from the heat radiator; a condensed water tank provided on the condensed water circulating passage and configured to store the condensed water therein; a condensed water pump provided on the condensed water circulating passage and configured to circulate the condensed water; and a condensed water/off-gas heat exchanger provided on the condensed water circulating passage and configured to exchange heat between the condensed water and an off-gas discharged from the solid oxide fuel cell; wherein at least a part of the water supplied to the reformer is the condensed water.

In this configuration, in a fuel cell system in which a moisture contained in a gas discharged from the fuel cell system is recovered and used for reforming the raw material, breeding of germs and the like can be reduced by heating the condensed water. In addition, exhaust heat energy can be efficiently utilized by heating the condensed water by the off-gas. Thus, the reforming water can be supplied stably while efficiently utilizing the energy.

"off-gas discharged from the solid oxide fuel cell" includes a cathode off-gas discharged from the cathode, an anode off-gas discharged from the anode, a combustion gas generated by combusting the cathode off-gas and the anode off-gas, etc..

An oxidizing (oxidant) gas used for combusting the anode off-gas in "combustion exhaust gas generated by combusting the anode off-gas" may be, for example, the air, or the cathode off-gas.

### [System configuration]

Fig. 1 is a block diagram showing the exemplary schematic configuration of a solid oxide fuel cell system according to Embodiment 1.

In the example of Fig. 1, a solid oxide fuel cell system 90 of the present embodiment includes a reformer 10, a solid oxide fuel cell 12, a heat radiator 17, a condensed water circulating passage 20, a condensed water tank 22, a condensed water pump 24, a condensed water/off-gas heat exchanger 26, and a reforming water pump 27.

The reformer 10 is configured to generate a hydrogen-containing gas by using a raw material and water. In the example of Fig. 1, the reforming water pump 27 is configured to operate to supply the condensed water to the reformer 10 through a reforming water passage 61. The raw material is supplied to the reformer 10 through a raw material passage 60. The reformer 10 is configured to supply the hydrogen-containing gas to the anode 14 through an anode gas passage. The condensed water may be supplied to the reformer 10 by utilizing the condensed water to humidify the gas (raw material, air, etc.) to be supplied to the reformer 10.

The raw material may be, for example, a gas containing an organic compound composed of at least carbon and hydrogen, such as a LPG gas, a propane gas, a butane gas, or a city gas containing methane as a major component, coal oil, alcohol, etc.. In a case where a liquid raw material such as the coal oil or alcohol is used, it may be heated and vaporized before being supplied to the reformer 10.

In the reformer 10, for example, steam reforming may take place by using the raw material and a steam.

In the reformer 10, for example, oxidative steam reforming may take place by using hydrocarbon contained in the raw material, water and oxygen contained in the humidified air. In the case of using the oxidative steam reforming, the reforming easily proceeds in terms of heat balance, and the size of the reformer 10 can be made smaller than that in the case of using the steam reforming. In addition, even when a sulfur compound is contained in the raw material, it is easily converted into SO₂ and the catalyst within the stack is less likely to be poisoned.

The reformer 10 is configured in such a manner that a reforming catalyst is filled into a container, for example. As the reforming catalyst, for example, an alumina carrier impregnated with at least one of platinum and rhodium may be used. The reforming catalyst is not particularly limited. For example, various catalysts may be used so long as they allow at least one of the steam reforming and the oxidative steam reforming to proceed.

The solid oxide fuel cell 12 is a solid oxide fuel cell including an anode 14 and a cathode 16, and generates electric power by using a hydrogen-containing gas supplied from the reformer 10 to the anode 14 and the air supplied to the cathode 16. In the example of Fig. 1, the air is supplied to the cathode 16 through a cathode gas passage 68. The cathode gas passage 68 may be provided with an air supply unit (not shown). The solid oxide fuel cell 12 may be configured to include, for example, a plurality of unit fuel cells which are connected in series and generate electric power through a power generation reaction between the anode 14 and the cathode 16.

The unit fuel cells may have a known configuration using, for example, yttria-stabilized zirconia (YSZ) as an electrolyte and the like. As the material of the unit fuel cell, zirconia doped with yttrium or scandium, or a lanthanum gallate based solid electrolyte may be used. In the unit fuel cell including the yttria-stabilized zirconia, the power generation reaction takes place in a temperature range of, for example, about 600 degrees C to about 1000 degrees C, although this depends on the thickness of the electrolyte.

The electric power generated by the power generation in the solid oxide fuel cell 12 is supplied to an outside load through a terminal which is not shown. The outside load may be, for example, a device constituting a base station of a cellular phone.

The heat radiator 17 is configured to radiate heat from an anode off-gas discharged from the anode 14 to generate condensed water. In the example of Fig. 1, the heat radiator 17 is provided on an anode off-gas passage 64 connected to the anode 14.

In general, the dew point of the anode off-gas is as high as 80 degrees C. When the anode off-gas is cooled to about 50 degrees C, the condensed water with a sufficient amount is obtained. Therefore, the radiator 17 may be configured in such a manner that for example, even in an environment in which an air temperature is high and infrastructure for supplying clean water is inadequate, the condensed water may cover the total amount of the water used to generate the hydrogen-containing gas with a required amount. In other words, the solid oxide fuel cell system 90 may be configured as an oxidative steam reforming solid oxide fuel cell system which allows the water to be self-sustainable even in a high-temperature area. The term "allows the water to be self-sustainable" means that the solid oxide fuel cell system is able to continue to operate by using the water obtained by using the raw material and the like, without depending on the water supplied from outside.

The heat radiator 17 may generate the condensed water by radiating heat from a combustion exhaust gas generated by combusting the anode off-gas discharged from the anode 14. In this case, the heat radiator 17 is provided on a combustion exhaust gas passage. In general, the dew point of the combustion exhaust gas is as high as about 70 degrees. When the combustion exhaust gas is cooled to about 50 degrees C, the condensed water with a sufficient amount is obtained.

The heat radiator 17 may be configured in any way provided that it is able to cool at least one of the anode off-gas and the combustion exhaust gas. The gas may be directly cooled by atmospheric air, or may be cooled in such a manner that the gas is caused to exchange heat with a cooling medium such as a circulated antifreezing fluid and the cooling medium is cooled by the atmospheric air in a radiator and the like. As the heat radiator 17, for example, a shell and tube heat exchanger may be used.

The condensed water circulating passage 20 is configured to circulate the condensed water supplied from the heat radiator 17. In the example of Fig. 1, the condensed water circulating passage 20 is constituted by a pipe and the like, the condensed water circulating passage 20 connects the condensed water tank 22, the condensed water pump 24, and the condensed water/off-gas heat exchanger 26 in this order, and the terminal end of the condensed water circulating passage 20 is connected to the condensed water tank 22. The order in which the condensed water tank 22, the condensed water pump 24, and the condensed water/off-gas heat exchanger 26 are connected to each other is not limited to the above.

The condensed water tank 22 is provided on the condensed water circulating passage 20 and is configured to store the condensed water therein. In the example of Fig. 1, a condensed water supply passage 66 which branches from the anode off-gas passage 64 in a location which is downstream of the heat radiator 17 is connected to the condensed water tank 22. In this configuration, the condensed water generated in the heat radiator 17 is supplied to the condensed water tank 22 through the condensed water supply passage 66. The condensed water supply passage 66 may be connected to another location of the condensed water circulating passage 20.

The condensed water tank 22 may be provided with a water supply mechanism for supplying the clean water from clean water infrastructure located outside the solid oxide fuel cell system 90 to the condensed water tank 22 at start-up. The condensed water tank 22 may be provided with a water drain mechanism for discharging the water from the condensed water tank 22 to outside the solid oxide fuel cell system 90 during non-use.

The condensed water pump 24 is provided on the condensed water circulating passage 20 to circulate the condensed water. When the condensed water pump 24 is activated, the condensed water stored in the condensed water tank 22 is circulated through the condensed water circulating passage 20. Specifically, the condensed water taken out of the condensed water tank 22 is circulated in such a manner that the condensed water flows through the condensed water/off-gas heat exchanger 26 and a humidifier 28 in this order and is returned to the condensed water tank 22. The off-gas discharged from the solid oxide fuel cell is in a sufficiently high temperature state and therefore can be utilized to heat and sterilize the condensed water. By circulating the condensed water by using the condensed water pump 24, for example, the condensed water is heated and sterilized in the condensed water/off-gas heat exchanger 26 on a regular basis, and thus breeding of the germs can be suppressed. This makes it possible to reduce a possibility of clogging of the condensed water circulating passage 20, the reforming water pump 27, and the like, a failure (e.g. float gets stuck in an unmovable state) of a water level meter attached to the condensed water tank 22, etc..

As the condensed water pump 24, for example, a plunger pump, a magnet pump, etc., may be used. The minimum discharge amount of the condensed water pump 24 may be a predetermined value which is equal to or more than 50g/minute. The minimum discharge amount of the condensed water pump 24 may be a predetermined value which is equal to or more than 100g/minute. The maximum discharge amount of the condensed water pump 24 may be a predetermined value which is equal to or less than 1000g/minute. Specifically, for example, the minimum discharge amount of the condensed water pump 24 may be 100g/minute, while the maximum discharge amount of the condensed water pump 24 may be 800g/minute.

The condensed water/off-gas heat exchanger 26 is provided on the condensed water circulating passage 20 and configured to exchange heat between the condensed water and the off-gas discharged from the solid oxide fuel cell 12. Since the temperature of the off-gas discharged from the solid oxide fuel cell 12 is high, the condensed water can be heated efficiently to a level at which the condensed water can be sterilized by utilizing the off-gas.

In the example of Fig. 1, the off-gas is the cathode off-gas discharged from the cathode 16, and the condensed water/off-gas heat exchanger 26 is provided on a cathode off-gas passage 70 connected to the cathode 16. As the condensed water/off-gas heat exchanger 26, for example, a plate heat exchanger, a double-pipe heat exchanger, etc., may be used.

An ion exchange device (ion exchange resin) may be provided on the condensed water circulating passage 20. Specifically, for example, the ion exchange device (ion exchange resin) may be provided on a portion of the condensed water circulating passage 20, which portion is from the condensed water tank 22 to the condensed water/off-gas heat exchanger 26.

The reforming water pump 27 is provided on a reforming water passage 61 and configured to supply the condensed water to the reformer 10. Although in the example of Fig. 1, the reforming water pump 27 is connected to the condensed water tank 22 through a reforming water passage 61, the reforming water pump 27 may be connected to the condensed water circulating passage 20 through the reforming water passage 61. Although in the example of Fig. 1, the reforming water pump 27 is connected to the raw material passage 60 through the reforming water passage 61, the reforming water pump 27 may be connected to the reformer 10 through the reforming water passage 61.

As the reforming water pump 27, for example, a plunger pump, a gear pump, a magnet pump, etc., may be used. The maximum discharge amount of the reforming water pump 27 may be a predetermined value which is equal to or less than 30g/minute. The maximum discharge amount of the reforming water pump 27 may be a predetermined value which is equal to or less than 10g/minute. The maximum discharge amount of the reforming water pump 27 may be a predetermined value which is equal to or less than 5g/minute. Specifically, for example, the minimum discharge amount of the reforming water pump 27 may be 0g/minute, while the maximum discharge amount of the reforming water pump 27 may be 30g/minute. The maximum discharge amount of the reforming water pump 27 may be equal to or more than 1g/minute or equal to or more than 5g/minute.

In a case where the amount of the reforming water supplied to the reformer 10 is small, the capacity of the reforming water pump 27 is also small, and hence clogging and the like is more likely to occur in the reforming water pump 27. In the configuration of the present embodiment, by circulating the condensed water by using the condensed water pump 24, for example, the condensed water is heated and sterilized in the condensed water/off-gas heat exchanger 26 on a regular basis, and thus breeding of the germs can be suppressed. Therefore, clogging and the like of the reforming water pump 27 is less likely to occur, even if the capacity of the reforming water pump 27 is small.

The means (condensed water supply unit) which supplies the condensed water to the reformer 10 is not limited to the reforming water pump 27, and another condensed water supply unit may be used. Any condensed water supply unit may be used so long as it is able to supply the condensed water to the reformer 10. As the condensed water supply unit, for example, the humidifier 28 described in Embodiment 2, etc., as well as the reforming water pump 27, may be used. Or, the condensed water supply unit may be a reforming water passage configured to automatically supply the condensed water to the reformer by a gravitational force.

The cathode gas passage 68 and the cathode off-gas passage 70 may be provided with a cathode air heat exchanger which exchanges heat between the air flowing through the cathode gas passage 68 and the cathode off-gas flowing through the cathode off-gas passage 70. In this configuration, the cathode off-gas heats the air up to a predetermined temperature (e.g., 700 degrees C) before the air is supplied to the cathode. Since the temperature of the air to be supplied to the cathode is raised in advance, for example, a temperature gradient within the stack becomes small, and a problem such as a cracking which would be caused by a thermal stress can be mitigated.

Modified examples of Embodiment 2 to Embodiment 9 may also be applied to Embodiment 1.

### (Embodiment 2)

A solid oxide fuel cell system of Embodiment 2 is the solid oxide fuel cell system of Embodiment 1, in which the reformer is configured to generate the hydrogen-containing gas by using humidified air and the raw material, and the heat radiator is configured to radiate heat from the anode off-gas discharged from the anode, the solid oxide fuel cell system of Embodiment 2 further comprising a humidifier provided on the condensed water circulating passage and configured to humidify the air by using the condensed water to generate the humidified air to be supplied to the reformer.

According to Embodiment 2, there is provided a solid oxide fuel cell system comprising a reformer configured to generate a hydrogen-containing gas by using humidified air and a raw material; a solid oxide fuel cell including an anode and a cathode, and configured to generate electric power by using the hydrogen-containing gas supplied from the reformer to the anode and air supplied to the cathode; an anode off-gas heat radiator configured to radiate heat from an anode off-gas discharged from the anode to generate condensed water; a condensed water circulating passage configured to circulate the condensed water supplied from the anode off-gas heat radiator; a condensed water tank provided on the condensed water circulating passage and configured to store the condensed water therein; a condensed water pump provided on the condensed water circulating passage and configured to circulate the condensed water; a condensed water/off-gas heat exchanger provided on the condensed water circulating passage and configured to exchange heat between the condensed water and an off-gas discharged from the solid oxide fuel cell; and a humidifier provided on the condensed water circulating passage and configured to humidify the air by using the condensed water to generate the humidified air to be supplied to the reformer.

In this configuration, it becomes possible to supply electric power more stably than in a conventional example, in an environment in which infrastructure for supplying clean water is inadequate and an air temperature tends to rise to about 50 degrees C.

"off-gas discharged from the solid oxide fuel cell" includes a cathode off-gas discharged from the cathode, an anode off-gas discharged from the anode, a combustion gas generated by combusting the cathode off-gas and the anode off-gas, etc..

In the above solid oxide fuel cell system, the off-gas used for heat exchange in the condensed water/off-gas heat exchanger may be the cathode off-gas discharged from the cathode.

In this configuration, the condensed water can be heated by using the cathode off-gas.

In the above solid oxide fuel cell system, the minimum discharge amount of the condensed water pump may be equal to or more than 50g/minute.

In this configuration, since a general pump can be used, manufacturing cost can be significantly reduced.

In the above solid oxide fuel cell system, the minimum discharge amount of the condensed water pump may be equal to or more than 100g/minute. The maximum discharge amount of the condensed water pump may be equal to or less than, for example, 1000g/minute.

### [System configuration]

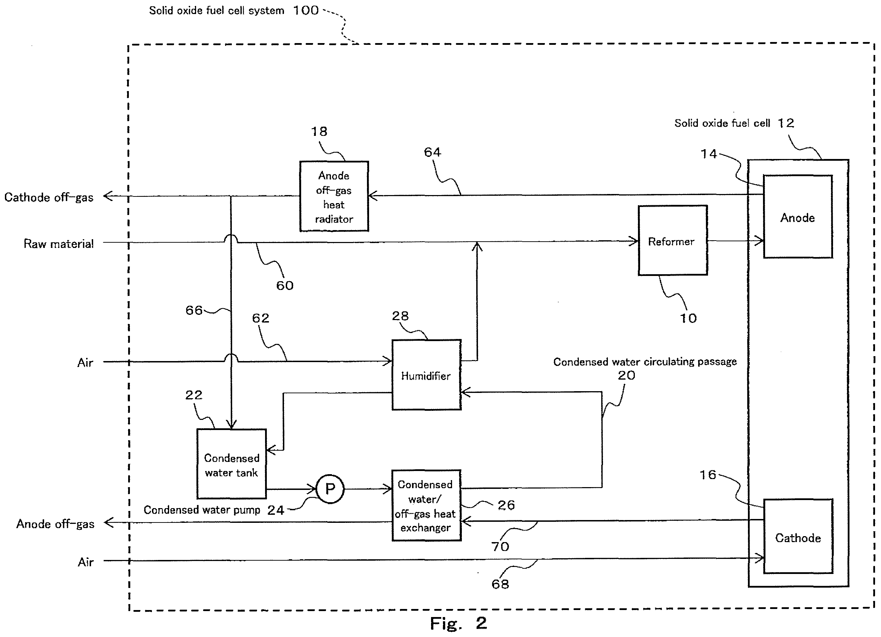

Fig. 2 is a block diagram showing the exemplary schematic configuration of the solid oxide fuel cell system according to Embodiment 2.

In the example of Fig. 2, a solid oxide fuel cell system 100 of the present embodiment includes the reformer 10, the solid oxide fuel cell 12, an anode off-gas heat radiator 18, the condensed water circulating passage 20, the condensed water tank 22, the condensed water pump 24, the condensed water/off-gas heat exchanger 26, and the humidifier 28.

The reformer 10 is configured to generate the hydrogen-containing gas by using the humidified air and the raw material. In the example of Fig. 2, the humidified air is supplied from the humidifier 28 to the reformer 10. The raw material is supplied to the reformer 10 through the raw material passage 60. The reformer 10 is configured to supply the hydrogen-containing gas to the anode 14 through the anode gas passage. In addition to the air, the raw material may be humidified.

The raw material may be, for example, a gas containing an organic compound composed of at least carbon and hydrogen, such as a LPG gas, a propane gas, a butane gas, or a city gas containing methane as a major component, coal oil, alcohol, etc.. In a case where the liquid raw material such as the coal oil or alcohol is used, it may be heated and vaporized before being supplied to the reformer 10. In the reformer 10, for example, oxidative steam reforming may take place by using hydrocarbon contained in the raw material, water and oxygen contained in the humidified air. In the case of using the oxidative steam reforming, the reforming easily proceeds in terms of heat balance, and the size of the reformer 10 can be made smaller than that in the case of using the steam reforming. In addition, even when a sulfur compound is contained in the raw material, it is easily converted into SO₂ and the catalyst within the stack is less likely to be poisoned.

The reformer 10 is configured in such a manner that the reforming catalyst is filled into the container, for example. As the reforming catalyst, for example, the alumina carrier impregnated with platinum may be used. The reforming catalyst is not particularly limited. For example, various catalysts may be used so long as they allow the oxidative steam reforming to proceed.

The solid oxide fuel cell 12 is a solid oxide fuel cell including the anode 14 and the cathode 16, and generates electric power by using the hydrogen-containing gas supplied from the reformer 10 to the anode 14 and the air supplied to the cathode 16. In the example of Fig. 2, the air is supplied to the cathode 16 through the cathode gas passage 68. The cathode gas passage 68 may be provided with an air supply unit which is not shown. The solid oxide fuel cell 12 may be configured to include, for example, a plurality of unit fuel cells which are connected in series and generate electric power through the power generation reaction between the anode 14 and the cathode 16.

The unit fuel cells may have a known configuration using, for example, yttria-stabilized zirconia (YSZ) as an electrolyte and the like. As the material of the unit fuel cell, zirconia doped with yttrium or scandium, or a lanthanum gallate based solid electrolyte may be used. In the unit fuel cell including the yttria-stabilized zirconia, the power generation reaction takes place in a temperature range of, for example, about 600 degrees C to about 1000 degrees C, although this depends on the thickness of the electrolyte.

The electric power generated by the power generation in the solid oxide fuel cell 12 is supplied to the outside load through the terminal which is not shown. The outside load may be, for example, the device constituting the base station of the cellular phone.

The anode off-gas heat radiator 18 is configured to radiate heat from the anode off-gas discharged from the anode 14 to generate the condensed water. In the example of Fig. 2, the anode off-gas heat radiator 18 is provided on the anode off-gas passage 64 connected to the anode 14.

In general, the dew point of the anode off-gas is as high as 80 degrees C. When the anode off-gas is cooled to about 50 degrees C, the condensed water with a sufficient amount is obtained. Therefore, the anode off-gas heat radiator 18 may be configured in such a manner that for example, even in an environment in which an air temperature is high and infrastructure for supplying clean water is inadequate, the condensed water may cover the total amount of the water used to generate the hydrogen-containing gas with a required amount. In other words, the solid oxide fuel cell system 100 may be configured as the oxidative steam reforming solid oxide fuel cell system which allows the water to be self-sustainable even in a high-temperature area. The term "allows the water to be self-sustainable" means that the solid oxide fuel cell system is able to continue to operate by using the water obtained by using the raw material and the like, without depending on the water supplied from outside.

The anode off-gas heat radiator 18 may be configured in any way provided that it is able to cool the anode off-gas. The anode off-gas may be directly cooled by atmospheric air, or may be cooled in such a manner that the anode off-gas is caused to exchange heat with the cooling medium such as the circulated antifreezing fluid and the cooling medium is cooled by the atmospheric air in the radiator and the like. As the anode off-gas heat radiator 18, for example, the shell and tube heat exchanger may be used.

The condensed water circulating passage 20 is configured to circulate the condensed water supplied from the anode off-gas heat radiator 18. In the example of Fig. 2, the condensed water circulating passage 20 is constituted by a pipe and the like, the condensed water circulating passage 20 connects the condensed water tank 22, the condensed water pump 24, the condensed water/off-gas heat exchanger 26, and the humidifier 28 in this order, and the terminal end of the condensed water circulating passage 20 is connected to the condensed water tank 22. The order in which the condensed water tank 22, the condensed water pump 24, the condensed water/off-gas heat exchanger 26, and the humidifier 28 are connected to each other is not limited to the above.

The condensed water tank 22 is provided on the condensed water circulating passage 20 and is configured to store the condensed water therein. In the example of Fig. 2, the condensed water supply passage 66 which branches from the anode off-gas passage 64 in a location which is downstream of the anode off-gas heat radiator 18 is connected to the condensed water tank 22. In this configuration, the condensed water generated in the anode off-gas heat radiator 18 is supplied to the condensed water tank 22 through the condensed water supply passage 66. The condensed water supply passage 66 may be connected to another location of the condensed water circulating passage 20.

The condensed water tank 22 may be provided with a water supply mechanism for supplying the clean water from clean water infrastructure located outside the solid oxide fuel cell system 100 to the condensed water tank 22 during start-up. The condensed water tank 22 may be provided with a water drain mechanism for discharging the water from the condensed water tank 22 to outside the solid oxide fuel cell system 100 during non-use.

The condensed water pump 24 is provided on the condensed water circulating passage 20 to circulate the condensed water. When the condensed water pump 24 is activated, the condensed water stored in the condensed water tank 22 is circulated through the condensed water circulating passage 20. Specifically, the condensed water taken out of the condensed water tank 22 is circulated in such a manner that the condensed water flows through the condensed water/off-gas heat exchanger 26 and the humidifier 28 in this order and is returned to the condensed water tank 22. By circulating the condensed water by using the condensed water pump 24, for example, the condensed water is heated and sterilized in the condensed water/off-gas heat exchanger 26 on a regular basis, and thus breeding of the germs can be suppressed. Therefore, clogging and the like of the condensed water circulating passage 20 is less likely to occur.

As the condensed water pump 24, for example, a plunger pump, a magnet pump, etc., may be used. The minimum discharge amount of the condensed water pump 24 may be a predetermined value which is equal to or more than 50g/minute. The minimum discharge amount of the condensed water pump 24 may be a predetermined value which is equal to or more than 100g/minute. The maximum discharge amount of the condensed water pump 24 may be a predetermined value which is equal to or less than 1000g/minute. Specifically, for example, the minimum discharge amount of the condensed water pump 24 may be 100g/minute, while the maximum discharge amount of the condensed water pump 24 may be 800g/minute.

The condensed water/off-gas heat exchanger 26 is provided on the condensed water circulating passage 20 and configured to exchange heat between the condensed water and the off-gas discharged from the solid oxide fuel cell 12. In the example of Fig. 2, the off-gas is the cathode off-gas discharged from the cathode 16, and the condensed water/off-gas heat exchanger 26 is provided on the cathode off-gas passage 70 connected to the cathode 16.

As the condensed water/off-gas heat exchanger 26, for example, a plate heat exchanger, a double-pipe heat exchanger, etc., may be used.

An ion exchange device (ion exchange resin) may be provided on the condensed water circulating passage 20. Specifically, for example, the ion exchange device (ion exchange resin) may be provided on a portion of the condensed water circulating passage 20, which portion is from the condensed water tank 22 to the condensed water/off-gas heat exchanger 26.

The humidifier 28 is provided on the condensed water circulating passage 20 and configured to humidify the air by using the condensed water to generate the humidified air to be supplied to the reformer 10. The air is supplied to the humidifier 28 through an air passage 62. The air passage 62 may be provided with an air supply unit such as a blower. In the example of Fig. 2, the humidified air is added to the raw material flowing through the raw material passage 60, but may be directly supplied to the reformer 10. As the humidifier 28, for example, a hollow fiber humidifier, a bubbler humidifier, etc., may be used. The operating temperature of the humidifier 28 may be, for example, a predetermined temperature (e.g., 60 degrees C) which is lower than 100 degrees C. In addition to the humidification of the air, the humidifier 28 may humidify the raw material by using the condensed water. In this case, both of the air passage 62 and the raw material passage 60 may be connected to the humidifier 28. Or, a plurality of humidifiers may be provided to humidify the air and the raw material by using the condensed water.

The cathode gas passage 68 and the cathode off-gas passage 70 may be provided with a cathode air heat exchanger which exchanges heat between the air flowing through the cathode gas passage 68 and the cathode off-gas flowing through the cathode off-gas passage 70. In this configuration, the cathode off-gas heats the air up to a predetermined temperature (e.g., 700 degrees C) before the air is supplied to the cathode. Since the temperature of the air to be supplied to the cathode is raised in advance, for example, a temperature gradient within the stack becomes small, and a problem such as a cracking which would be caused by a thermal stress can be mitigated.

### [Operation]

Hereinafter, the exemplary operation of the solid oxide fuel cell system of Embodiment 2 will be described. The following description is merely an example of the operation, and specific numeric values and the like may be suitably changed. In the following example, it is supposed that the cathode air heat exchanger (not shown) is provided to exchange heat between the air supplied to the cathode and the cathode off-gas.

It is supposed that the power generation output of the fuel cell is 1500W, fuel utilization efficiency Uf is 75%, the raw material is LPG having a composition in which propane (C₃H₈) is 50% and butane (C₄H₁₀) is 50%. When an average composition is expressed as a chemical formula CₙHₘ, it is C_{3.5}H₉.

When the conversion rate of hydrocarbon is 100%, the reaction formula of the oxidative steam reforming is as follows:

*CₙHₘ* + *αO*₂ + *βH*₂*O* ⇔ *aCO* + *bCO*₂ + *cH₂* + *dH*₂*O* · · · (1)

where O/C = 2 α/n, S/C = β/n. a, b, c, and d are varied depending on the composition of the hydrogen-containing gas, the characteristics of the reformer, reforming temperature, etc.. O of O/C does not include oxygen atoms originating in water (H₂O), but include only oxygen atoms originating in oxygen (O₂).

Hereinafter, a case where O/C = 0.8, and S/C = 1.2 (α = 1.4, β = 4.2) will be described. To perfectly combust of 1 mole of C_{3.5}H₉, 5.75 mole of O₂ is required. When α = 1.4, the supply amount of O₂ corresponding to 1 mole of C_{3.5}H₉ is 1.4 mole according to the formula (1). Therefore, *λ* = 1.4/5.75 ≒ 0.24 is derived. The value of O/C and the value of S/C are not limited to the above, but may be any values so long as the solid oxide fuel cell system can operate.

The temperature of the condensed water stored in the condensed water tank 22 is about 60 degrees C. Specifically, for example, the condensed water pump 24 sends the condensed water to the condensed water/off-gas heat exchanger 26 at a flow rate of 500g/minute. The condensed water is heated up to about 85 degrees C for about 900W by the cathode off-gas discharged from the cathode air heat exchanger.

The heated condensed water is supplied to the humidifier 28. The humidifier 28 is supplied with water of 7.7g/minute and humidifies the air. At this time, energy of about 350W is deprived from the condensed water as evaporation latent heat of the water. Therefore, the temperature of the air discharged from the humidifier 28 and the temperature of the condensed water discharged from the humidifier 28 become about 75 degrees C. The humidified air is mixed with the fuel gas and a mixture of the fuel gas and the humidified air is supplied to the reformer 10. The condensed water discharged from the humidifier 28 is cooled by the pipe, the radiator, etc., and is stored in the condensed water tank 22 as the hot water with 60 degrees C.

The reformer 10 causes the oxidative steam reforming to proceed by using the humidified air and the raw material to generate the hydrogen-containing gas. The composition of an unreformed gas which is the mixture of the humidified air and the raw material is suitable for the oxidative steam reforming. Since O/C = 0.8, and S/C = 1.2, the oxidative steam reforming proceeds suitably in the reformer 10.

Even when a pulsation occurs in the discharge amount of the condensed water pump 24, the temperature of the cathode off-gas, the flow rate of the cathode off-gas, etc., the temperature of the condensed water in the condensed water circulating passage 20 is less likely to rapidly change because of the high heat capacity of the water, and O/C and S/C of the unreformed gas are stable. Therefore, carbon is less likely to be deposited in the reformer 10.

### [Modified example]

A solid oxide fuel cell system of the present example is the solid oxide fuel cell system of Embodiment 2, in which the off-gas used for heat exchange in the condensed water/off-gas heat exchanger is the anode off-gas discharged from the anode.

In this configuration, it becomes possible to supply electric power more stably than in a conventional example, in an environment in which infrastructure for supplying clean water is inadequate and an air temperature tends to rise to about 50 degrees C. In addition, the condensed water can be heated by using the anode off-gas.

Fig. 3 is a block diagram showing the exemplary schematic configuration of the solid oxide fuel cell system according to the modified example of Embodiment 2. A solid oxide fuel cell system 100A of the present modified example is different from the solid oxide fuel cell system 100 of Embodiment 2 in that the off-gas which exchanges heat with the condensed water is the anode off-gas discharged from the anode 14.

The condensed water/off-gas heat exchanger 26 is provided on the condensed water circulating passage 20 and configured to exchange heat between the condensed water and the off-gas discharged from the solid oxide fuel cell 12. In the present modified example, the condensed water/off-gas heat exchanger 26 is provided on the anode off-gas passage 64 connected to the anode 14 As the condensed water/off-gas heat exchanger 26, for example, a plate heat exchanger, a double-pipe heat exchanger, etc., may be used.

Except for the above, the system configuration and operation of the solid oxide fuel cell system 100A of the present modified example may be the same as those of the solid oxide fuel cell system 100 of Embodiment 2. Therefore, in Figs. 2, and 3, the same components are designated by the same reference symbols and names, and the system configuration and operation of the solid oxide fuel cell system 100A will not be described in detail repeatedly.

In the present modified example, it becomes possible to supply electric power more stably than in a conventional example, in an environment in which infrastructure for supplying clean water is inadequate and an air temperature tends to rise to about 50 degrees C. In addition, the condensed water can be heated by using the anode off-gas.

Embodiment 2 and the present modified example may be combined. That is, both of the heat exchange between the condensed water and the anode off-gas and the heat exchange between the condensed water and the cathode off-gas may be performed.

### (Embodiment 3)

A solid oxide fuel cell system of Embodiment 3 is the solid oxide fuel cell system of Embodiment 2 or the modified example of Embodiment 2, which further comprise a condensed water heat radiator provided on the condensed water circulating passage in a location which is downstream of the humidifier and upstream of the condensed water tank and configured to radiate heat from the condensed water.

In this configuration, for example, it becomes possible to reduce a possibility that the condensed water is re-evaporated in the condensed water tank and a steam flows back. Or, for example, the air can be humidified more effectively by raising the temperature of the humidifier.

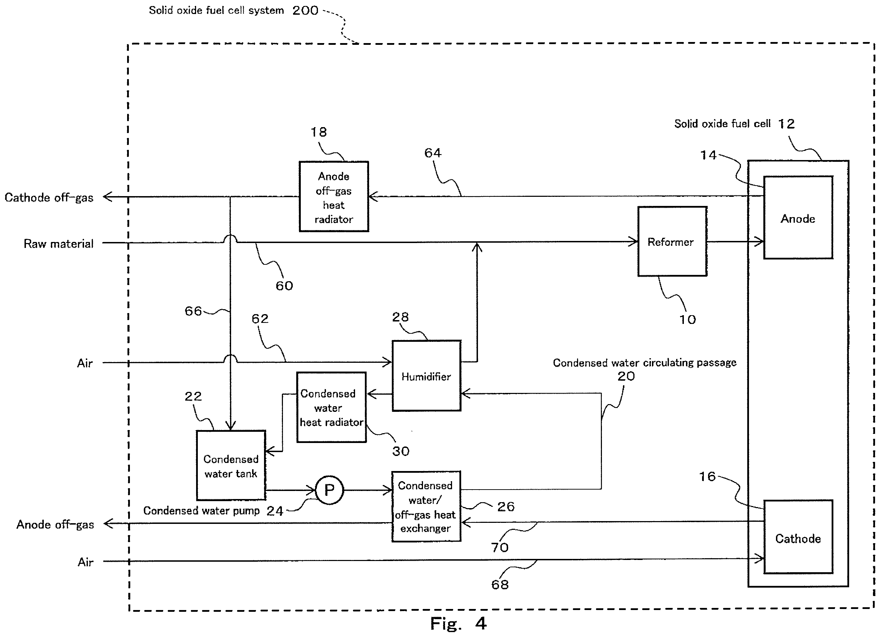

Fig. 4 is a block diagram showing the exemplary schematic configuration of the solid oxide fuel cell system according to Embodiment 3.

As exemplarily shown in Fig. 4, a solid oxide fuel cell system 200 of Embodiment 3 includes a condensed water heat radiator 30.

The condensed water heat radiator 30 is provided on the condensed water circulating passage 20 in a location which is downstream of the humidifier 28 and upstream of the condensed water tank 22 and configured to radiate heat from the condensed water. For example, the heat may be radiated from the condensed water in such a manner that the condensed water is cooled by atmospheric air, in the radiator and the like. As the condensed water heat radiator 30, for example, a fin and tube heat exchanger, and the like may be used.

Except for the above, the system configuration and operation of the solid oxide fuel cell system 200 of Embodiment 3 may be the same as those of the solid oxide fuel cell system 100 of Embodiment 2. Therefore, in Figs. 2, and 4, the same components are designated by the same reference symbols and names, and the system configuration and operation of the solid oxide fuel cell system 200 will not be described in detail repeatedly.

In the solid oxide fuel cell system 200, the condensed water discharged from the humidifier 28 is cooled in the condensed water heat radiator 30 and then supplied to the condensed water tank 22. In this configuration, a temperature difference between the humidifier 28 and the condensed water tank 22 can be increased. Therefore, for example, it becomes possible to reduce a possibility that the condensed water is re-evaporated in the condensed water tank 22 and a steam flows back toward the cathode off-gas 70. Or, for example, the air can be humidified more effectively by raising the temperature of the humidifier 28

Modified example of Embodiment 2 may also be applied to Embodiment 3.

### (Embodiment 4)

A solid oxide fuel cell system of Embodiment 4 is the solid oxide fuel cell system of Embodiment 2, the modified example of Embodiment 2, or Embodiment 3, which further comprises a bypass air passage configured to bypass the humidifier such that unhumidified air is supplied to the reformer, and a first switch configured to perform switching between a state in which the air is supplied to the reformer through the humidifier and a state in which the air is supplied to the reformer through the bypass air passage.

In this configuration, a start-up time can be reduced.

The phrase "perform switching between a state in which the air is supplied to the reformer through the humidifier and a state in which the air is supplied to the reformer through the bypass air passage" is meant to include a case where ON/OFF switching is performed to select a state in which all of the air is supplied to the reformer through the humidifier or a state in which all of the air is supplied to the reformer through the bypass air passage, and a case where a ratio between the flow rate of the air supplied to the reformer through the humidifier and the flow rate of the air supplied to the reformer through the bypass air passage is changed.

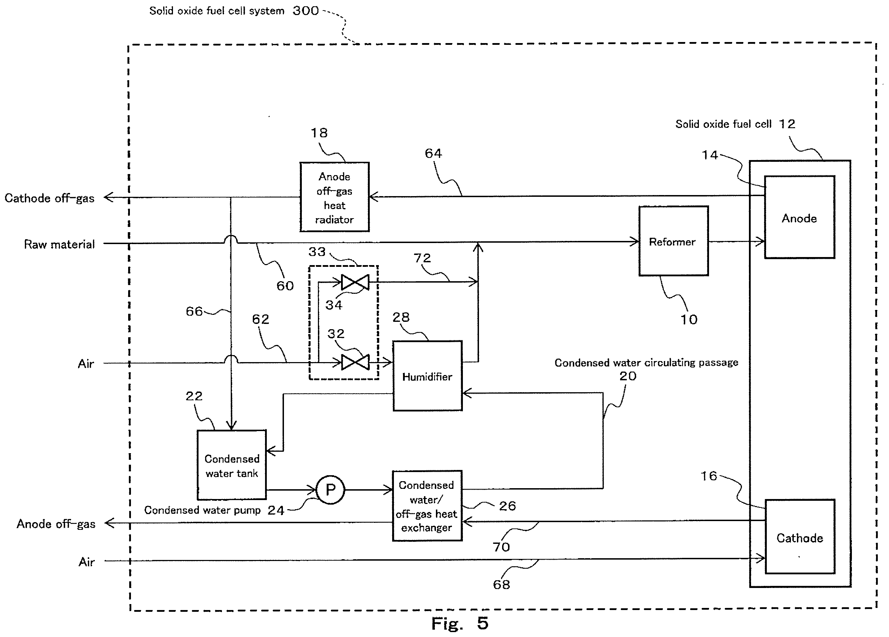

Fig. 5 is a block diagram showing the exemplary schematic configuration of the solid oxide fuel cell system according to Embodiment 4.

As exemplarily shown in Fig. 5, a solid oxide fuel cell system 300 of Embodiment 4 includes a bypass air passage 72 and a first switch 33.

The bypass air passage 72 is configured to bypass the humidifier 28 such that unhumidified air is supplied to the reformer. In the example of Fig. 2, the bypass air passage 72 is configured to branch from the air passage 62 in a location which is upstream of the humidifier 28, and be joined to the air passage 62 in a location which is downstream of the humidifier 28 such that the bypass air passage 72 bypasses the humidifier 28.

The first switch 33 is configured to perform switching between a state in which the air is supplied to the reformer through the humidifier 28 and a state in which the air is supplied to the reformer through the bypass air passage 72. In the example of Fig. 5, the first switch 33 includes a first on-off valve 32 and a second on-off valve 34. The bypass air passage 72 branches from a branch section provided on the air passage 62. The first on-off valve 32 is provided on a passage extending from the branch section to the humidifier 28. The second on-off valve 34 is provided on the bypass air passage 72.

The first switch 33 opens the first on-off valve 32 and closes the second on-off valve 34 during, for example, a normal operation such that the air is supplied to the reformer 10 through the humidifier 28 without flowing through the bypass air passage 72. The first switch 33 closes the first on-off valve 32 and opens the second on-off valve 34 during, for example, start-up such that the air is supplied to the reformer 10 through the bypass air passage 72 without flowing through the humidifier 28. The first on-off valve 32 and the second on-off valve 34 may be on-off valves which are capable of selecting a fully open state or a fully closed state, or may be, for example, flow control valves which are capable of continuously controlling their opening degrees.

The first switch 33 may not necessarily include the first on-off valve 32 and the second on-off valve 34, but may be constituted by, for example, a three-way valve.

The first switch 33 may be controlled by, for example, a control unit. In this case, the control unit may be configured as in the control unit of modified example of the present embodiment, and will not be described in detail.

Except for the above, the system configuration and operation of the solid oxide fuel cell system 300 of Embodiment 4 may be the same as those of the solid oxide fuel cell system 100 of Embodiment 2. Therefore, in Figs. 2, and 5, the same components are designated by the same reference symbols and names, and the system configuration and operation of the solid oxide fuel cell system 300 will not be described in detail repeatedly.

During start-up, it is necessary to increase the temperatures of the reformer 10, the solid oxide fuel cell 12, and others. If partial oxidation reforming which generates a greater amount of heat than the oxidative steam reforming does can proceed in the reformer 10 during start-up, then the start-up time can be reduced. In the present embodiment, during start-up, the first switch 33 causes the air to be supplied to the reformer 10 through the bypass air passage 72 and thus the unhumidified air is supplied to the reformer 10. Thus, during start-up, the partial oxidation reforming can proceed in the reformer 10, and a heat generation amount can be increased. As a result, the start-up time can be reduced.

For example, at a time point when the temperatures of the reformer 10, the solid oxide fuel cell 12, and others reach temperatures at which the power generation operation is enabled, the first switch 33 causes the air to be supplied to the reformer 10 through the humidifier 28, so that the humidified air is supplied to the reformer 10. Such control enables the oxidative steam reforming to proceed in the reformer and the hydrogen-containing gas to be generated efficiently during the power generation operation.

Modified examples of Embodiment 2 and Embodiment 3 may also be applied to Embodiment 4.

### (Modified example)

A solid oxide fuel cell system according to a modified example of Embodiment 4 is the solid oxide fuel cell system of Embodiment 2, the modified example of Embodiment 2, Embodiment 3, or Embodiment 4, which further comprises a control unit configured to deactivate the condensed water pump during start-up.

In this configuration, the start-up time can be reduced.

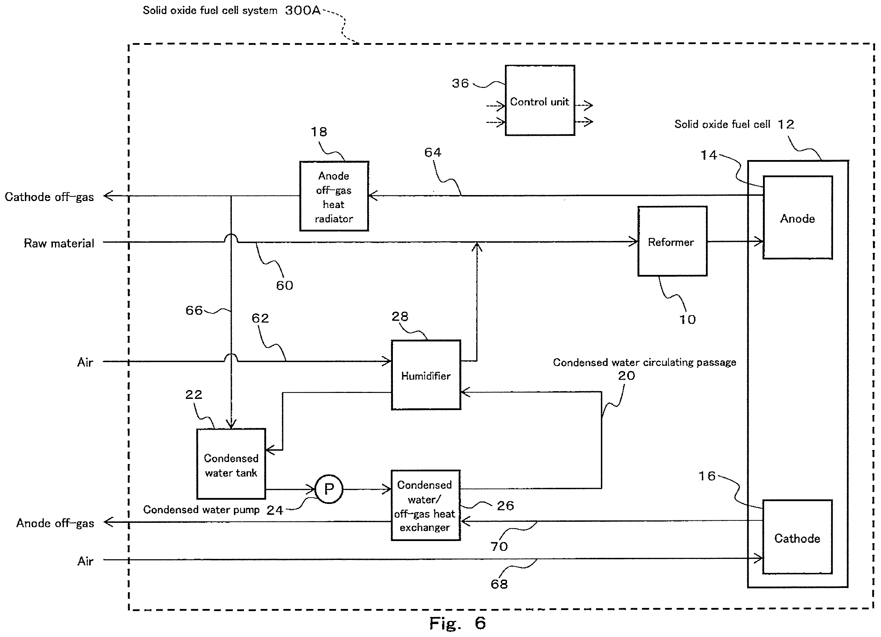

Fig. 6 is a block diagram showing the exemplary schematic configuration of the solid oxide fuel cell system according to the modified example of Embodiment 4.

As exemplarily shown in Fig. 6, a solid oxide fuel cell system 300A according to the modified example of Embodiment 4 includes a control unit 36.

The control unit 36 is configured to deactivate the condensed water pump 24 during start-up. The control unit 36 may be communicatively coupled to the condensed water pump 24. It is sufficient that the control unit 36 has a control function. The control unit 36 includes a processor section (not shown), and a storage section (not shown) for storing control programs. As examples of the processor section, there are MPU, and CPU. As examples of the storage section, there are memories. The control unit may be constituted by a single control unit which performs centralized control but may be a plurality of control units which cooperate with each other to perform distributed control.

Except for the above, the system configuration and operation of the solid oxide fuel cell system 300A according to the modified example of Embodiment 4 may be the same as those of the solid oxide fuel cell system 100 of Embodiment 2. Therefore, in Figs. 2, and 6, the same components are designated by the same reference symbols and names, and the system configuration and operation of the solid oxide fuel cell system 300A will not be described in detail repeatedly.

In the present modified example, as in Embodiment 4, the partial oxidation reforming which generates a greater amount of heat than the oxidative steam reforming does can proceed in the reformer 10 during start-up, and thus the start-up time can be reduced. In the present embodiment, during start-up, the control unit 36 deactivates the operation of the condensed water pump 24. In a state in which the condensed water pump 24 is deactivated, heating of the condensed water in the condensed water/off-gas heat exchanger 26 does not progress, so that the temperature of the condensed water in the condensed water circulating passage 20 becomes lower that than in a case where the condensed water pump 24 is activated. Because of this, humidification of the air in the humidifier 28 does not progress easily, and the unhumidified air is supplied to the reformer 10. Thus, during start-up, the partial oxidation reforming can proceed in the reformer 10, and a heat generation amount can be increased. As a result, the start-up time can be reduced.

For example, at a time point when the temperatures of the reformer 10, the solid oxide fuel cell 12, and others reach temperatures at which the power generation operation is enabled, the control unit 36 starts the operation of the condensed water pump 24, so that the humidified air is supplied to the reformer 10. Such control enables the oxidative steam reforming to proceed in the reformer and the hydrogen-containing gas to be generated efficiently during the power generation operation.

The present modified example may also be applied to Embodiment 3 and Embodiment 4.

### (Embodiment 5)

A solid oxide fuel cell system according to Embodiment 5 is the solid oxide fuel cell system of Embodiment 2, the modified example of Embodiment 2, Embodiment 3, Embodiment 4, or the modified example of Embodiment 4, which further comprises a combustor configured to combust the anode off-gas and the cathode off-gas to generate a combustion gas, wherein the off-gas used for heat exchange in the condensed water/off-gas heat exchanger is a combustion gas discharged from the combustor.

In this configuration, the dew point of the air discharged from the humidifier can be increased.

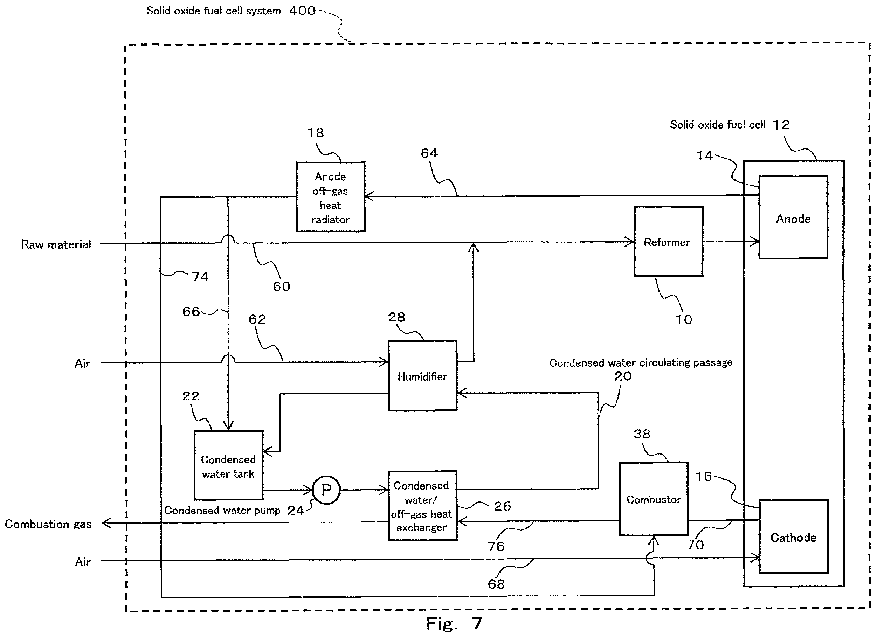

Fig. 7 is a block diagram showing the exemplary schematic configuration of the solid oxide fuel cell system according to Embodiment 5.

As exemplarily shown in Fig. 7, a solid oxide fuel cell system 400 of Embodiment 5 includes a combustor 38.

The combustor 38 is configured to combust the anode off-gas and the cathode off-gas to generate the combustion gas. In the example of Fig. 2, the upstream side of the combustor 38 is connected to the cathode off-gas passage 70 and to the anode off-gas passage 64, while the downstream side of the combustor 38 is connected to a combustion gas passage 76. The combustor 38 is constituted by, for example, a burner. The combustor 38 is configured to mix the anode off-gas supplied from the anode 14 through the anode off-gas passage 64 and the cathode off-gas supplied from the cathode 16 through the cathode off-gas passage 70 and combust the anode off-gas and the cathode off-gas. The combustion gas generated by the combustion is discharged to outside the solid oxide fuel cell system 400 through the combustion gas passage 76. The combustion gas is an example of the off-gas discharged from the solid oxide fuel cell 12.

In the solid oxide fuel cell system 400, the condensed water/off-gas heat exchanger 26 is provided on the combustion gas passage 76. The condensed water/off-gas heat exchanger 26 is configured to exchange heat between the condensed water and the combustion gas discharged from the combustor 38.

Except for the above, the system configuration and operation of the solid oxide fuel cell system 400 of Embodiment 5 may be the same as those of the solid oxide fuel cell system 100 of Embodiment 2. Therefore, in Figs. 2, and 7, the same components are designated by the same reference symbols and names, and the system configuration and operation of the solid oxide fuel cell system 400 will not be described in detail repeatedly.

In the solid oxide fuel cell system 400, since the combustor 38 combusts the anode off-gas and the cathode off-gas, the temperature of the off-gas (combustion gas) supplied to the condensed water/off-gas heat exchanger 26 can be increased. The amount of heat exchanged in the condensed water/off-gas heat exchanger 26 can be increased, and the temperature of the condensed water discharged from the condensed water/off-gas heat exchanger 26 can be increased. This makes it possible to reduce the size of the heat exchanger while realizing a desired heat exchange amount or increase the dew point of the air discharged from the humidifier 28.

Modified examples of Embodiment 2, Embodiment 3, and Embodiment 4 may also be applied to Embodiment 5. The present embodiment may be combined with Embodiment 2 or the modified example of Embodiment 2. For example, both of the heat exchange between the condensed water and the cathode off-gas and the heat exchange between the condensed water and the combustion gas may take place. Or, both of the heat exchange between the condensed water and the anode off-gas and the heat exchange between the condensed water and the combustion gas may take place. Or, all of the heat exchange between the condensed water and the cathode off-gas, the heat exchange between the condensed water and the anode off-gas, and the heat exchange between the condensed water and the combustion gas may take place.

### (Embodiment 6)

A solid oxide fuel cell system according to Embodiment 6 is the solid oxide fuel cell system of Embodiment 2, the modified example of Embodiment 2, Embodiment 3, Embodiment 4, the modified example of Embodiment 4, or Embodiment 5, wherein the anode off-gas heat radiator is configured to exchange heat between a liquid cooling medium and the anode off-gas to radiate heat from the anode off-gas, the solid oxide fuel cell system comprising: a water storage amount detector configured to detect an amount of water stored in the condensed water tank; a cooling medium circulating passage configured to circulate the cooling medium; a cooling medium pump provided on the cooling medium circulating passage and configured to circulate the cooling medium; a cooling medium heat radiator provided on the cooling medium circulating passage and configured to exchange heat between the cooling medium and atmospheric air to radiate heat from the cooling medium; and a control unit configured to control a discharge amount of the cooling medium pump based on a result of detection of the water storage amount detector.

In this configuration, the generation amount of the condensed water can be controlled properly based on the amount of water stored in the condensed water tank.

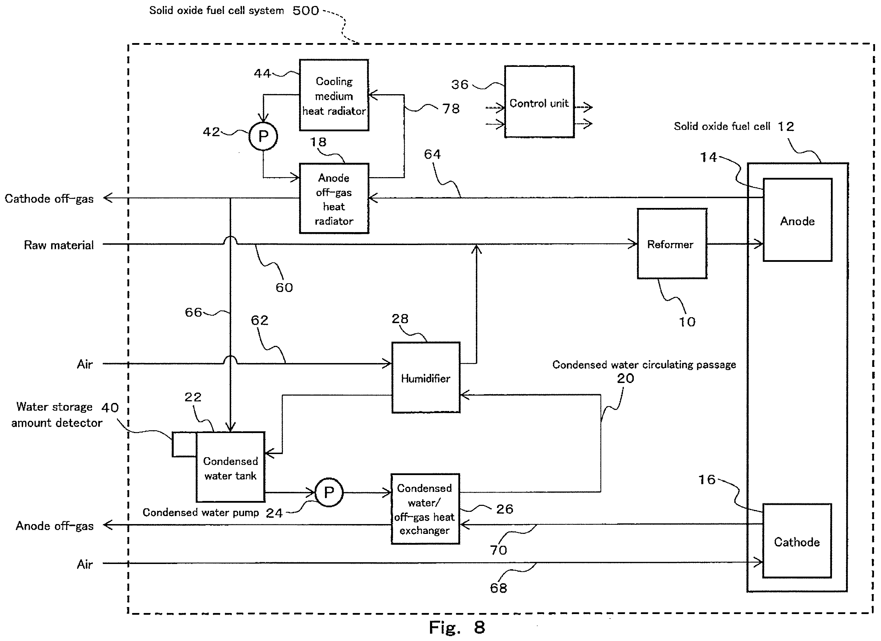

Fig. 8 is a block diagram showing the exemplary schematic configuration of the solid oxide fuel cell system according to Embodiment 6.

As exemplarily shown in Fig. 8, the solid oxide fuel cell system 500 of Embodiment 6 includes a water storage amount detector 40, a cooling medium circulating passage 78, a cooling medium pump 42, a cooling medium heat radiator 44, and a control unit 36.

In the present embodiment, the anode off-gas heat radiator 18 is configured to exchange heat between the liquid cooling medium and the anode off-gas to radiate heat from the anode off-gas.

The water storage amount detector 40 is configured to detect the amount of water stored in the condensed water tank. Specifically, for example, the water storage amount detector 40 may be constituted by a water level sensor, etc..

The cooling medium circulating passage 78 is configured to circulate the cooling medium. In the example of Fig. 8, the cooling medium circulating passage 78 is constituted by a pipe and the like, and connects the anode off-gas heat radiator 18, the cooling medium heat radiator 44, and the cooling medium pump 42 in this order, and the terminal end of the cooling medium circulating passage 78 is connected to the anode off-gas heat radiator 18. Although in the example of Fig. 8, the cooling medium pump 42 is located downstream of the cooling medium heat radiator 44 and upstream of the anode off-gas heat radiator 18, the cooling medium pump 42 may be located downstream of the anode off-gas heat radiator 18 and upstream of the cooling medium heat radiator 44.

As the cooling medium, for example, water, an antifreeze liquid, and the like may be used.

The cooling medium pump 42 is provided on the cooling medium circulating passage 78 and configured to circulate the cooling medium. When the cooling medium pump 42 is activated, the cooling medium is circulated through the cooling medium circulating passage 78. Specifically, the cooling medium discharged from the cooling medium pump 42 is circulated in such a manner that the cooling medium flows through the anode off-gas heat radiator 18 and the cooling medium heat radiator 44 in this order and is returned to the cooling medium pump 42.

As the cooling medium pump 42, for example, a plunger pump, a magnet pump, etc., may be used.

The cooling medium heat radiator 44 is provided on the cooling medium circulating passage 78, and configured to exchange heat between the cooling medium and the atmospheric air to radiate heat from the cooling medium. For example, the heat may be radiated from the cooling medium in such a manner that the cooling medium is cooled by atmospheric air, in the radiator and the like. As the cooling medium heat radiator 44, for example, a fin and tube heat exchanger, and the like may be used.

The control unit 36 is configured to control the discharge amount of the cooling medium pump 42 based on a result of detection of the water storage amount detector 40. The control unit 36 may be communicatively connected to the water storage amount detector 40 and to the cooling medium pump 42. The configuration of the control unit 36 may be the same as that of the modified example of Embodiment 4, except for the above, and will not be described in detail repeatedly.

Except for the above, the system configuration and operation of the solid oxide fuel cell system 500 according to the modified example of Embodiment 6 may be the same as those of the solid oxide fuel cell system 100 of Embodiment 2. Therefore, in Figs. 2, and 8, the same components are designated by the same reference symbols and names, and the system configuration and operation of the solid oxide fuel cell system 500 will not be described in detail repeatedly.

In the present embodiment, the control unit 36 is configured to control the discharge amount of the cooling medium pump 42 based on a result of detection of the water storage amount detector 40. In this configuration, the generation amount of the condensed water can be controlled properly based on the amount of water stored in the condensed water tank 22.

Specifically, for example, when the amount of water stored in the condensed water tank 22 is small, the discharge amount of the cooling medium pump 42 is increased to increase the heat exchange amount in the anode off-gas heat radiator 18. Such control can increase the cooling amount of the anode off-gas and increase the generation amount of the condensed water.

Or, for example, when the amount of water stored in the condensed water tank 22 is large, the discharge amount of the cooling medium pump 42 is decreased to decrease the heat exchange amount in the anode off-gas heat radiator 18. Such control can decrease cooling amount of the anode off-gas and decrease the generation amount of the condensed water.

As described above, in the present embodiment, the generation amount of the condensed water can be controlled properly based on the amount of water stored in the condensed water tank 22.

Modified examples of Embodiment 2, Embodiment 3, Embodiment 4, and Embodiment 5 may also be applied to Embodiment 6.

### (Embodiment 7)

A solid oxide fuel cell system according to Embodiment 7 is the solid oxide fuel cell system of Embodiment 2, the modified example of Embodiment 2, Embodiment 3, Embodiment 4, the modified example of Embodiment 4, Embodiment 5 or Embodiment 6, wherein the condensed water circulating passage includes a heat exchanger bypass passage configured to circulate the condensed water such that the condensed water does not flow through the condensed water/off-gas heat exchanger, and a second switch configured to perform switching between circulation of the condensed water through the condensed water/off-gas heat exchanger and circulation of the condensed water through the heat exchanger bypass passage.

The phrase "perform switching between circulation of the condensed water through the condensed water/off-gas heat exchanger and circulation of the condensed water through the heat exchanger bypass passage" is meant to include a case where ON/OFF switching is performed to select circulation of all of the condensed water through the condensed water/off-gas heat exchanger or circulation of all of the condensed water through the heat exchanger bypass passage, and a case where a ratio between the flow rate of the condensed water circulated through the condensed water/off-gas heat exchanger and the flow rate of the condensed water circulated through the heat exchanger bypass passage is changed.

In this configuration, the dew point of the air discharged from the humidifier can be controlled easily.

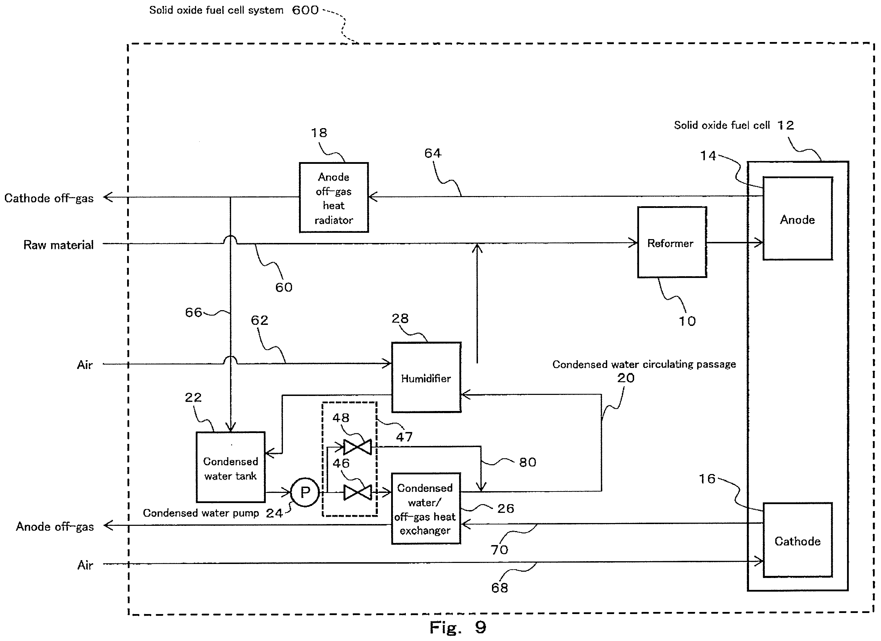

Fig. 9 is a block diagram showing the exemplary schematic configuration of the solid oxide fuel cell system according to Embodiment 7.

As exemplarily shown in Fig. 9, in a solid oxide fuel cell system 600 of Embodiment 7, the condensed water circulating passage 20 includes a heat exchanger bypass passage 80, and a second switch 47.

The heat exchanger bypass passage 80 is configured to circulate the condensed water such that the condensed water does not flow through the condensed water/off-gas heat exchanger 26. In the example of Fig. 9, the heat exchanger bypass passage 80 is configured to branch from the condensed water circulating passage 20 in a location which is upstream of the condensed water/off-gas heat exchanger 26, and be joined to the condensed water circulating passage 20 in a location which is downstream of the condensed water/off-gas heat exchanger 26 such that the heat exchanger bypass passage 80 bypasses the condensed water/off-gas heat exchanger 26.

The second switch 47 is configured to perform switching between circulation of the condensed water through the condensed water/off-gas heat exchanger 26 and circulation of the condensed water through the heat exchanger bypass passage 80.

In the example of Fig. 9, the second switch 47 includes a third on-off valve 46 and a fourth on-off valve 48. The heat exchanger bypass passage 80 branches from a branch section provided on a portion of the condensed water circulating passage 20, which portion connects the condensed water tank 22 to the condensed water/off-gas heat exchanger 26. The third on-off valve 46 is provided on a portion of the condensed water circulating passage 20, which portion extends from the branch section to the condensed water/off-gas heat exchanger 26. The fourth on-off valve 48 is provided on the heat exchanger bypass passage 80.

In a case where the temperature of the condensed water to be supplied to the humidifier 28 is increased, for example, the second switch 47 opens the third on-off valve 46 and closes the fourth on-off valve 48, so that the condensed water is circulated through the condensed water/off-gas heat exchanger 26 without flowing through the heat exchanger bypass passage 80.

In a case where the temperature of the condensed water to be supplied to the humidifier 28 is decreased, the second switch 47 closes the third on-off valve 46 and opens the fourth on-off valve 48, so that the condensed water is circulated through the heat exchanger bypass passage 80 without flowing through the condensed water/off-gas heat exchanger 26.

The third on-off valve 46 and the fourth on-off valve 48 may be on-off valves which are capable of selecting a fully open state or a fully closed state, or may be, for example, flow control valves which are capable of continuously controlling their opening degrees. In this configuration, by changing the ratio between the flow rate of the condensed water circulated through the condensed water/off-gas heat exchanger 26 and the flow rate of the condensed water circulated through the heat exchanger bypass passage 80, the temperature of the condensed water to be supplied to the humidifier 28 can be controlled more effectively.

The second switch 47 may not necessarily include the third on-off valve 46 and the fourth on-off valve 48, but may be constituted by, for example, a three-way valve. Or, the second switch unit 47 may be constituted by only one of the third on-off valve 46 and the fourth on-off valve 48.

The second switch 47 may be controlled by, for example, a control unit. In this case, the control unit may be configured as in the control unit of the modified example of Embodiment 4, and will not be described in detail repeatedly.

Except for the above, the system configuration and operation of the solid oxide fuel cell system 600 of Embodiment 7 may be the same as those of the solid oxide fuel cell system 100 of Embodiment 2. Therefore, in Figs. 2, and 9, the same components are designated by the same reference symbols and names, and the system configuration and operation of the solid oxide fuel cell system 600 will not be described in detail repeatedly.

In the present embodiment, since the second switch 47 controls the heating amount of the condensed water in the condensed water/off-gas heat exchanger 26, the temperature of the condensed water to be supplied to the humidifier 28 can be easily controlled. Therefore, the dew point of the air discharged from the humidifier 28 can be controlled easily.

Modified examples of Embodiment 2, Embodiment 3, Embodiment 4, Embodiment 5, and Embodiment 6 may also be applied to Embodiment 7.

### (Embodiment 8)

A solid oxide fuel cell system according to Embodiment 8 is the solid oxide fuel cell system of Embodiment 2, the modified example of Embodiment 2, Embodiment 3, Embodiment 4, the modified example of Embodiment 4, Embodiment 5, Embodiment 6, or Embodiment 7, wherein the condensed water circulating passage include a humidifier bypass passage configured to circulate the condensed water such that the condensed water does not flow through the humidifier, and a third switch configured to perform switching between circulation of the condensed water through the humidifier and circulation of the condensed water through the humidifier bypass passage.

The phrase "perform switching between circulation of the condensed water through the humidifier and circulation of the condensed water through the humidifier bypass passage" is meat to include a case where ON/OFF switching is performed to select circulation of all of the condensed water through the humidifier or circulation of all of the condensed water through the humidifier bypass passage, and a case where a ratio between the flow rate of the condensed water circulated through the humidifier and the flow rate of the condensed water circulated through the humidifier bypass passage is changed.

In this configuration, the dew point of the air discharged from the humidifier can be controlled easily.

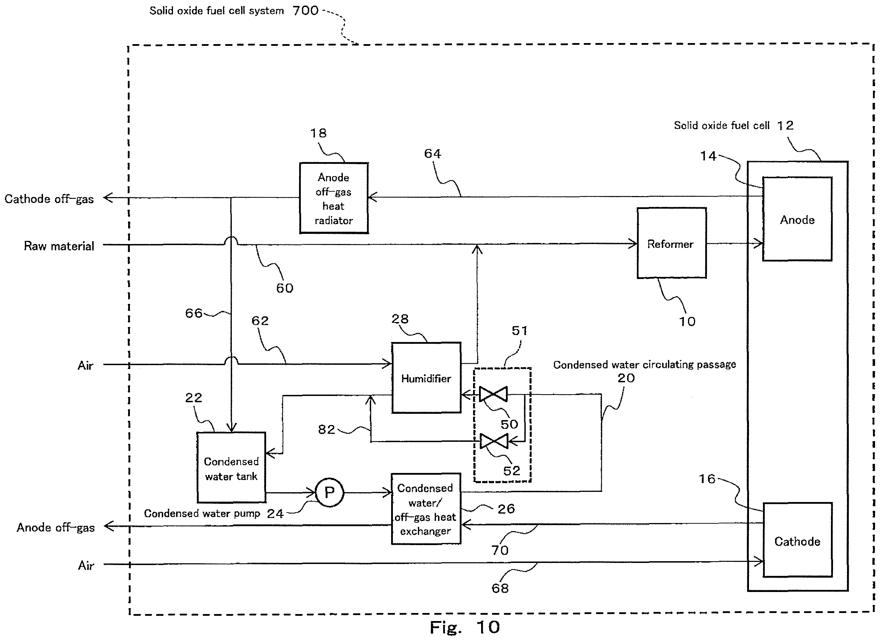

Fig. 10 is a block diagram showing the exemplary schematic configuration of the solid oxide fuel cell system according to Embodiment 8.

As exemplarily shown in Fig. 10, in a solid oxide fuel cell system 700 according to Embodiment 8, the condensed water circulating passage 20 includes a humidifier bypass passage 82 and a third switch 51.

The humidifier bypass passage 82 is configured to circulate the condensed water such that the condensed water does not flow through the humidifier 28. In the example of Fig. 10, the heat exchanger bypass passage 80 is configured to branch from the condensed water circulating passage 20 in a location which is upstream of the humidifier 28, and be joined to the condensed water circulating passage 20 in a location which is downstream of the humidifier 28 such that the heat exchanger bypass passage 80 bypasses the humidifier 28.

The third switch 51 is configured to perform switching between circulation of the condensed water through the humidifier 28 and circulation of the condensed water through the humidifier bypass passage 82.

In the example of Fig. 10, the third switch 51 includes a fifth on-off valve 50 and a sixth on-off valve 52. The humidifier bypass passage 82 branches from a branch section provided on a portion of the condensed water circulating passage 20, which portion connects the condensed water/off-gas heat exchanger 26 to the humidifier 28. The fifth on-off valve 50 is provided on a portion of the condensed water circulating passage 20, which portion extends from the branch section to the humidifier 28. The sixth on-off valve 52 is provided on the humidifier bypass passage 82.

In a case where the flow rate of the condensed water to be supplied to the humidifier 28 is increased, for example, the third switch 51 opens the fifth on-off valve 50 and closes the sixth on-off valve 52, so that the condensed water is circulated through the humidifier 28 without flowing through the humidifier bypass passage 82.

In a case where the flow rate of the condensed water to be supplied to the humidifier 28 is decreased, for example, the third switch 51 closes the fifth on-off valve 50 and opens the sixth on-off valve 52, so that the condensed water is circulated through the humidifier bypass passage 82 without flowing through the humidifier 28.

The fifth on-off valve 50 and the sixth on-off valve 52 may be on-off valves which are capable of selecting a fully open state or a fully closed state, or may be, for example, flow control valves which are capable of continuously controlling their opening degrees. In this configuration, by changing the ratio between the flow rate of the condensed water circulated through the humidifier 28 and the flow rate of the condensed water circulated through the humidifier bypass passage 82, the flow rate of the condensed water to be supplied to the humidifier 28 can be controlled more effectively.

The third switch 51 may not necessarily include the fifth on-off valve 50 and the sixth on-off valve 52, but may be constituted by, for example, a three-way valve. Or, the third switch unit 51 may be constituted by only one of the fifth on-off valve 50 and the sixth on-off valve 52.

The third switch 51 may be controlled by, for example, a control unit. In this case, the control unit may be configured as in the control unit of the modified example of Embodiment 4, and will not be described in detail repeatedly.

Except for the above, the system configuration and operation of the solid oxide fuel cell system 700 of Embodiment 8 may be the same as those of the solid oxide fuel cell system 100 of Embodiment 2. Therefore, in Figs. 2, and 10, the same components are designated by the same reference symbols and names, and the system configuration and operation of the solid oxide fuel cell system 700 will not be described in detail repeatedly.

In the present embodiment, since the third switch 51 controls the flow rate of the condensed water to be supplied to the humidifier 28, the dew point of the air discharged from the humidifier 28 can be controlled easily.

Modified examples of Embodiment 2, Embodiment 3, Embodiment 4, Embodiment 5, Embodiment 6, and Embodiment 7 may also be applied to Embodiment 8.

### (Embodiment 9)

A solid oxide fuel cell system according to Embodiment 9 is the solid oxide fuel cell system of Embodiment 2, the modified example of Embodiment 2, Embodiment 3,

Embodiment 4, the modified example of Embodiment 4, Embodiment 5, Embodiment 6, Embodiment 7, or Embodiment 8, which further comprises an ion concentration detector configured to detect an ion concentration of the condensed water stored in the condensed water tank, a notification unit, and a control unit configured to cause the notification unit to output an alarm based on a result of detection of the ion concentration detector.

In this configuration, it becomes possible to reduce a possibility that salt and the like is deposited in the humidifier and the heat exchanger.

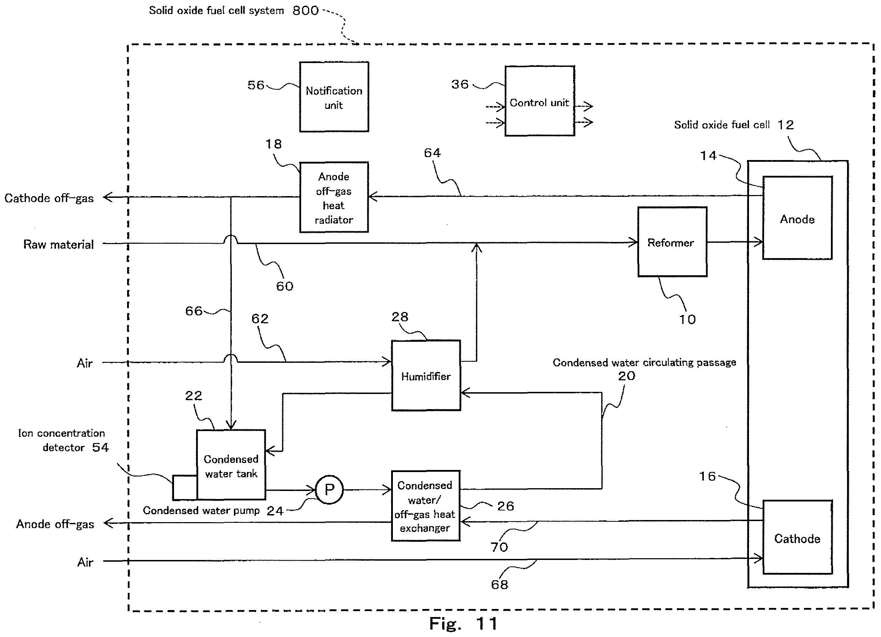

Fig. 11 is a block diagram showing the exemplary schematic configuration of the solid oxide fuel cell system according to Embodiment 9.

As exemplarily shown in Fig. 11, a solid oxide fuel cell system 800 according to Embodiment 9 includes an ion concentration detector 54, a notification unit 56, and a control unit 36.

The ion concentration detector 54 is configured to detect the ion concentration of the condensed water stored in the condensed water tank 22. As the ion concentration detector 54, for example, an electric conductivity meter including a sensor placed inside the condensed water tank 22, etc., may be used.

As the notification unit 56, for example, a buzzer, a transmitter which wirelessly transmits an alarm signal, etc., may be used.

The control unit 36 causes the notification unit 56 to output the alarm based on a result of detection of the ion concentration detector 54. The control unit 36 may be communicatively connected to the ion concentration detector 54 and to the notification unit 56. For example, in a case where the ion concentration detected by the ion concentration detector 54 is equal to or higher than 20mS, the control unit 36 causes the notification unit 56 to output the alarm. When the alarm is output, the control unit 36 may discharge the condensed water stored in the condensed water tank 22 to outside the solid oxide fuel cell system 800 and supply to the condensed water tank 22 the clean water supplied from clean water infrastructure located outside the solid oxide fuel cell system 800. The configuration of the control unit 36 may be the same as that of the modified example of Embodiment 4, except for the above, and will not be described in detail repeatedly.

Except for the above, the system configuration and operation of the solid oxide fuel cell system 800 according to Embodiment 9 may be the same as those of the solid oxide fuel cell system 100 of Embodiment 2. Therefore, in Figs. 2, and 11, the same components are designated by the same reference symbols and names, and the system configuration and operation of the solid oxide fuel cell system 800 will not be described in detail repeatedly.

In the present embodiment, the ion concentration detector 54, the notification unit 56 and the control unit 36 can reduce a possibility that the ion concentration of the water within the condensed water circulating passage 20 is increased excessively. Therefore, it becomes possible to reduce a possibility that salt and the like is deposited in the humidifier 28, the condensed water/off-gas heat exchanger 26, etc..

Modified examples of Embodiment 2, Embodiment 3, Embodiment 4, Embodiment 5, Embodiment 6, Embodiment 7, and Embodiment 8 may also be applied to Embodiment 9.

Numeral improvements and alternative embodiments of the present invention will be obvious to those skilled in the art in view of the foregoing description. Accordingly, the description is to be construed as illustrative only, and is provided for the purpose of teaching those skilled in the art the best mode of carrying out the present invention. The details of the structure and/or function may be varied within the scope of the claims without departing from the present invention.

### Industrial Applicability

An aspect of the present invention is useful as a solid oxide fuel cell system which is capable of supplying electric power more stably than in a conventional solid oxide fuel cell system, in an environment in which infrastructure for supplying clean water is inadequate and an air temperature tends to rise.

### Reference Signs List

10 reformer
12 solid oxide fuel cell
14 anode
16 cathode
18 anode off-gas heat radiator
20 condensed water circulating passage
22 condensed water tank
24 condensed water pump
26 condensed water/off-gas heat exchanger
27 reforming water pump
28 humidifier
30 condensed water heat radiator
32 first on-off valve
33 first switch
34 second on-off valve
36 control unit
38 combustor
40 water storage amount detector
42 cooling medium pump
44 cooling medium heat radiator
46 third on-off valve
47 second switch
48 fourth on-off valve
50 fifth on-off valve
51 third switch
52 sixth on-off valve
54 ion concentration detector
56 notification unit
60 raw material passage
61 reforming water passage
62 air passage
64 anode off-gas passage
66 condensed water supply passage
68 cathode gas passage
70 cathode off-gas passage
72 bypass air passage
76 combustion gas passage
78 cooling medium circulating passage
80 heat exchanger bypass passage
82 humidifier bypass passage
100, 100A, 200, 300, 300A, 400, 500, 600, 700, 800 solid oxide fuel cell system

ERRATUM:In all figures, except for Fig. 7, the terms "Cathode off-gas" and "Anode off-gas" have to be swapped.

## Claims

1. A solid oxide fuel cell system comprising:
a reformer (10) configured to generate a hydrogen-containing gas by using a raw material and water or humidified air;
a solid oxide fuel cell (12) including an anode (14) and a cathode (16), and configured to generate electric power by using the hydrogen-containing gas supplied from the reformer (10) to the anode (14) and air supplied to the cathode (16);
a heat radiator (17, 18) configured to radiate heat from at least one of an anode off-gas discharged from the anode (14) and a combustion exhaust gas generated by combusting the anode off-gas to generate condensed water;
a condensed water circulating passage (20) configured to circulate the condensed water supplied from the heat radiator (17, 18);
a condensed water tank (22) provided on the condensed water circulating passage (20) and configured to store the condensed water therein;
a condensed water pump (24) provided on the condensed water circulating passage (20) and configured to circulate the condensed water;
a condensed water/off-gas heat exchanger (26) provided on the condensed water circulating passage (20) and configured to exchange heat between the condensed water and an off-gas discharged from the solid oxide fuel cell (12) to heat the condensed water by the off-gas; and
a reforming water pump (27) configured to supply to the reformer (10) the condensed water as at least a part of the water supplied to the reformer (10);
or a humidifier (28) provided on the condensed water circulating passage (20) and configured to humidify air using the condensed water to generate the humidified air supplied to the reformer (10),
**characterized in that** the condensed water pump (24) circulates the condensed water in such a manner that the condensed water discharged from the condensed water pump (24) flows through the condensed water/off-gas heat exchanger (26), and
wherein the condensed water/off-gas heat exchanger (26) is a plate heat exchanger or a double-pipe heat exchanger.

2. The solid oxide fuel cell system according to claim 1,
wherein in the solid oxide fuel cell (12), a temperature of the anode (14) and a temperature of the cathode (16) during power generation are equal to or higher than 600 degrees C and equal to or lower than 1000 degrees C.

3. The solid oxide fuel cell system according to claim 1 or 2,
wherein a minimum discharge amount of the condensed water pump (24) is equal to or more than 50g/minute.

4. The solid oxide fuel cell system according to, any one of claims 1 to 3,
wherein the off-gas used for heat exchange in the condensed water/off-gas heat exchanger (26) is a cathode off-gas discharged from the cathode (16).

5. The solid oxide fuel cell system according to any one of claims 1 to 3,
wherein the off-gas used for heat exchange in the condensed water/off-gas heat exchanger (26) is the anode off-gas discharged from the anode (14).

6. The solid oxide fuel cell system according to any one of claims 1 to 5, further comprising:
a condensed water heat radiator (30) provided on the condensed water circulating passage (20) in a location which is downstream of the humidifier (28) and upstream of the condensed water tank (22) and configured to radiate heat from the condensed water.

7. The solid oxide fuel cell system according to any one of claims 1 to 6, further comprising:
a bypass air passage (72) configured to bypass the humidifier (28) such that unhumidified air is supplied to the reformer (10); and
a first switch (33) configured to perform switching between a state in which the air is supplied to the reformer (10) through the humidifier (28) and a state in which the air is supplied to the reformer (10) through the bypass air passage (72).

8. The solid oxide fuel cell system according to any one of claims 1 to 7, further comprising:
a control unit (26) configured to deactivate the condensed water pump (24) during start-up.

9. The solid oxide fuel cell system according to any one of claims 1 to 8, comprising:
a combustor (38) configured to combust the anode off-gas and a cathode off-gas to generate a combustion gas,
wherein the off-gas used for heat exchange in the condensed water/off-gas heat exchanger (26) is the combustion gas discharged from the combustor (38).

10. The solid oxide fuel cell system according to any one of claims 1 to 9,
wherein the anode off-gas heat radiator (18) is configured to exchange heat between a liquid cooling medium and the anode off-gas to radiate heat from the anode off-gas,
the solid oxide fuel cell system (500) further comprising:
a water storage amount detector (40) configured to detect an amount of water stored in the condensed water tank (22);
a cooling medium circulating passage (78) configured to circulate the cooling medium;
a cooling medium pump (42) provided on the cooling medium circulating passage (78) and
configured to circulate the cooling medium;
a cooling medium heat radiator (44) provided on the cooling medium circulating passage (78) and configured to exchange heat between the cooling medium and atmospheric air to radiate heat from the cooling medium; and
a control unit (36) configured to control a discharge amount of the cooling medium pump (42) based on a result of detection of the water storage amount detector (40).

11. The solid oxide fuel cell system according to any one of claims 1 to 10,
wherein the condensed water circulating passage (20) includes:
a heat exchanger bypass passage (80) configured to circulate the condensed water such that the condensed water does not flow through the condensed water/off-gas heat exchanger (26); and
a second switch (47) configured to perform switching between circulation of the condensed water through the condensed water/off-gas heat exchanger (26) and circulation of the condensed water through the heat exchanger bypass passage (80).

12. The solid oxide fuel cell system according to any one of claims 1 to 10,
wherein the condensed water circulating passage (20) includes:
a humidifier bypass passage (82) configured to circulate the condensed water such that the condensed water does not flow through the humidifier (28); and
a third switch (51) configured to perform switching between circulation of the condensed water through the humidifier (28) and circulation of the condensed water through the humidifier bypass passage (82).

13. The solid oxide fuel cell system according to any one of claims 1 to 11, further comprising:
an ion concentration detector (54) configured to detect an ion concentration of the condensed water stored in the condensed water tank (22);
a notification unit (56); and
a control unit (36) configured to cause the notification unit (56) to output an alarm based on a result of detection of the ion concentration detector (54).

## Patentansprüche

1. Festoxid-Brennstoffzellen-System, das umfasst:
einen Reformer (10), der so eingerichtet ist, dass er unter Verwendung eines Rohstoffs und von Wasser oder befeuchteter Luft ein wasserstoffhaltiges Gas erzeugt;
eine Festoxid-Brennstoffzelle (12), die eine Anode (14) sowie eine Kathode (16) enthält und so eingerichtet ist, dass sie unter Verwendung des der Anode (14) von dem Reformer (10) zugeführten wasserstoffhaltigen Gases und der Kathode (10) zugeführter Luft elektrische Energie erzeugt;
einen Wärmestrahler (17, 18), der so eingerichtet ist, dass er von einem von der Anode (14) abgeleiteten Anoden-Abgas oder/und einem durch Verbrennung des Anoden-Abgases erzeugten Verbrennungsabgas Wärme abstrahlt, um Kondenswasser zu erzeugen;
einen Kondenswasser-Zirkulationskanal (20), der so eingerichtet ist, dass er das von dem Wärmestrahler (17, 18) zugeführte Kondenswasser zirkulieren lässt;
einen Kondenswasser-Tank (22), der sich an dem Kondenswasser-Zirkulationskanal (20) befindet und zum Speichern des Kondenswassers darin eingerichtet ist;
eine Kondenswasser-Pumpe (24), die sich an dem Kondenswasser-Zirkulationskanal (20) befindet und zum Zirkulieren des Kondenswassers eingerichtet ist;
einen Kondenswasser/Abgas-Wärmetauscher (26), der sich an dem Kondenswasser-Zirkulationskanal (20) befindet und so eingerichtet ist, dass er Wärmeaustausch zwischen dem Kondenswasser und einem von der Festoxid-Brennstoffzelle (12) abgeleiteten Abgas durchführt, um das Kondenswasser mit dem Abgas zu erwärmen; sowie
eine Pumpe (27) für Reformier-Wasser, die so eingerichtet ist, dass sie dem Reformer (10) das kondensierte Wasser als wenigstens einen Teil des dem Reformer (10) zugeführten Wassers zuführt;
oder einen Befeuchter (28), der sich an dem Kondenswasser-Zirkulationskanal (20) befindet und so eingerichtet ist, dass er Luft unter Verwendung des Kondenswassers befeuchtet, um die dem Reformer (10) zugeführte befeuchtete Luft zu erzeugen,
**dadurch gekennzeichnet, dass**
die Kondenswasser-Pumpe (24) das Kondenswasser so zirkulieren lässt, dass das von der Kondenswasser-Pumpe (24) abgegebene Kondenswasser durch den Kondenswasser/Abgas-Wärmetauscher (26) strömt, und
wobei der Kondenswasser/Abgas-Wärmetauscher (26) ein Platten-Wärmetauscher oder ein Doppelrohr-Wärmetauscher ist.

2. Festoxid-Brennstoffzellen-System nach Anspruch 1,
wobei in der Festoxid-Brennstoffzelle (12) eine Temperatur der Anode (14) und eine Temperatur der Kathode (16) bei Stromerzeugung 600 °C oder höher und 1000 °C oder niedriger ist.

3. Festoxid-Brennstoffzellen-System nach Anspruch 1 oder 2,
wobei eine minimale Fördermenge der Kondenswasser-Pumpe (24) 50 g/min oder mehr beträgt.

4. Festoxid-Brennstoffzellen-System nach einem der Ansprüche 1 bis 3,
wobei das für Wärmeaustausch in dem Kondenswasser/Abgas-Wärmetauscher (26) verwendete Abgas ein von der Kathode (16) abgegebenes Kathoden-Abgas ist.

5. Festoxid-Brennstoffzellen-System nach einem der Ansprüche 1 bis 3,
wobei das für Wärmeaustausch in dem Kondenswasser/Abgas-Wärmetauscher (26) verwendete Abgas das von der Anode (14) abgegebene Anoden-Abgas ist.

6. Festoxid-Brennstoffzellen-System nach einem der Ansprüche 1 bis 5, das des Weiteren umfasst:
einen Kondenswasser-Wärmestrahler (30), der sich an dem Kondenswasser-Zirkulationskanal (20) an einer Position befindet, die stromab von dem Befeuchter (28) und stromauf von dem Kondenswasser-Tank (22) liegt, und der zum Abstrahlen von Wärme von dem Kondenswasser eingerichtet ist.

7. Festoxid-Brennstoffzellen-System nach einem der Ansprüche 1 bis 6, das des Weiteren umfasst:
einen Umgehungs-Luftkanal (72), der so eingerichtet ist, dass er den Befeuchter (28) so umgeht, dass dem Reformer (10) nicht befeuchtete Luft zugeführt wird; und
einen ersten Schalter (33), der so eingerichtet ist, dass er Umschalten zwischen einem Zustand, in dem die Luft dem Reformer (10) über den Befeuchter (28) zugeführt wird, und einem Zustand durchführt, in dem die Luft dem Reformer (10) über den Umgehungs-Luftkanal (72) zugeführt wird.

8. Festoxid-Brennstoffzellen-System nach einem der Ansprüche 1 bis 7, das des Weiteren umfasst:
eine Steuerungs-Einheit (26), die so eingerichtet ist, dass sie die Kondenswasser-Pumpe (24) beim Starten deaktiviert.

9. Festoxid-Brennstoffzellen-System nach einem der Ansprüche 1 bis 8, das umfasst:
einen Brenner (38), der so eingerichtet ist, dass er das Anoden-Abgas und ein Kathoden-Abgas verbrennt, um ein Verbrennungsgas zu erzeugen,
wobei das für Wärmeaustausch in dem Kondenswasser/Abgas-Wärmetauscher (26) verwendete Abgas das von dem Brenner (38) abgegebene Verbrennungsgas ist.

10. Festoxid-Brennstoffzellen-System nach einem der Ansprüche 1 bis 9,
wobei der Anoden-Abgas-Wärmestrahler (18) so eingerichtet ist, dass er Wärmeaustausch zwischen einem flüssigen Kühlmedium und dem Anoden-Abgas durchführt, um Wärme von dem Anoden-Abgas abzustrahlen,
und das Festoxid-Brennstoffzellen-System (500) des Weiteren umfasst:
einen Detektor (40) für eine gespeicherte Wassermenge, der zum Erfassen einer in dem Kondenswasser-Tank (22) gespeicherten Wassermenge eingerichtet ist;
einen Kühlmittel-Zirkulationskanal (78), der so eingerichtet ist, dass er das Kühlmittel zirkulieren lässt;
eine Kühlmittel-Pumpe (42), die sich an dem Kühlmittel-Zirkulationskanal (78) befindet und so eingerichtet ist, dass sie das Kühlmittel zirkulieren lässt;
einen Kühlmittel-Wärmestrahler (44), der sich an dem Kühlmittel-Zirkulationskanal (78) befindet und so eingerichtet ist, dass er Wärmeaustausch zwischen dem Kühlmittel und atmosphärischer Luft durchführt, um Wärme von dem Kühlmittel abzustrahlen; sowie
eine Steuerungs-Einheit (36), die so eingerichtet ist, dass sie eine Fördermenge der Kühlmittel-Pumpe (42) auf Basis eines Erfassungsergebnisses des Detektors (40) für eine gespeicherte Wassermenge steuert.

11. Festoxid-Brennstoffzellen-System nach einem der Ansprüche 1 bis 10,
wobei der Kondenswasser-Zirkulationskanal (20) enthält:
einen Wärmetauscher-Umgehungskanal (80), der so eingerichtet ist, dass er das Kondenswassers so zirkulieren lässt, dass das Kondenswasser nicht durch den Kondenswasser/Abgas-Wärmetauscher (26) strömt; sowie
einen zweiten Schalter (47), der so eingerichtet ist, dass er Umschalten zwischen Zirkulation des Kondenswassers durch den Kondenswasser/Abgas-Wärmetauscher (26) und Zirkulation des Kondenswassers durch den Wärmetauscher-Umgehungskanal (80) durchführt.

12. Festoxid-Brennstoffzellen-System nach einem der Ansprüche 1 bis 10,
wobei der Kondenswasser-Zirkulationskanal (20) enthält:
einen Befeuchter-Umgehungskanal (82), der so eingerichtet ist, dass er das Kondenswasser so zirkulieren lässt, dass das Kondenswasser nicht durch den Befeuchter (28) strömt; sowie
einen dritten Schalter (51), der so eingerichtet ist, dass er Umschalten zwischen Zirkulation des Kondenswassers durch den Befeuchter (28) und Zirkulation des Kondenswassers durch den Befeuchter-Umgehungskanal (82) durchführt.

13. Festoxid-Brennstoffzellen-System nach einem der Ansprüche 1 bis 11, das des Weiteren umfasst:
einen lonenkonzentrations-Detektor (54), der zum Erfassen einer lonenkonzentration des in dem Kondenswasser-Tank (22) gespeicherten Kondenswassers eingerichtet ist;
eine Benachrichtigungs-Einheit (56); sowie
eine Steuerungs-Einheit (36), die so eingerichtet ist, dass sie die Benachrichtigungs-Einheit (56) auf Basis eines Erfassungsergebnisses des lonenkonzentrations-Detektors (54) veranlasst, eine Warnung auszugeben.

## Revendications

1. Système de pile à combustible à oxyde solide comprenant:
un reformeur (10) configuré pour générer un gaz contenant de l'hydrogène en utilisant une matière première et
de l'eau ou de l'air humidifié;
une pile à combustible à oxyde solide (12) comprenant une anode (14) et une cathode (16), et configurée pour générer de l'énergie électrique en utilisant le gaz contenant de l'hydrogène fourni par le reformeur (10) à l'anode (14) et l'air fourni à la cathode (16);
un radiateur thermique (17, 18) configuré pour émettre de la chaleur à partir d'au moins l'un du gaz résiduel d'anode refoulé de l'anode (14) et du gaz d'échappement de combustion généré par la combustion du gaz résiduel d'anode pour générer de l'eau de condensation;
un passage de circulation d'eau de condensation (20) configuré pour faire circuler l'eau de condensation fournie par le radiateur thermique (17, 18);
un réservoir d'eau de condensation (22) prévu sur le passage de circulation d'eau de condensation (20) et
configuré pour y stocker l'eau de condensation;
une pompe à eau de condensation (24) prévue sur le passage de circulation d'eau de condensation (20) et
configuré pour faire circuler l'eau de condensation;
un échangeur thermique eau de condensation/gaz résiduel (26) prévu sur le passage de circulation d'eau de condensation (20) et configuré pour échanger de la chaleur entre l'eau de condensation et un gaz résiduel refoulé de la pile à combustible à oxyde solide (12) pour chauffer l'eau de condensation par le gaz résiduel; et
une pompe à eau de reformage (27) configurée pour fournir au reformeur (10) l'eau de condensation comme au moins une partie de l'eau fournie au reformeur (10);
ou un humidificateur (28) prévu sur le passage de circulation d'eau de condensation (20) et configuré pour humidifier l'air en utilisant l'eau de condensation pour générer l'air humidifié fourni au reformeur (10),
**caractérisé en ce que** la pompe à eau de condensation (24) fait circuler l'eau de condensation de telle sorte que l'eau de condensation refoulée de la pompe à eau de condensation (24) s'écoule à travers l'échangeur thermique eau de condensation/gaz résiduel (26), et
dans lequel l'échangeur thermique eau de condensation/gaz résiduel (26) est un échangeur thermique à plaques ou un échangeur thermique à double conduite.

2. Système de pile à combustible à oxyde solide selon la revendication 1,
dans lequel, dans la pile à combustible à oxyde solide (12), une température de l'anode (14) et une température de la cathode (16) pendant la production d'énergie sont égales ou supérieures à 600 degrés C et égales ou inférieures à 1000 degrés C.

3. Système de pile à combustible à oxyde solide selon les revendications 1 ou 2,
dans lequel une quantité minimale de décharge de la pompe à eau de condensation (24) est égale ou supérieure à 50 g/minute.

4. Système de pile à combustible à oxyde solide selon l'une quelconque des revendications 1 à 3,
dans lequel le gaz résiduel utilisé pour l'échange de chaleur dans l'échangeur thermique eau de condensation/gaz résiduel (26) est un gaz résiduel refoulé de la cathode (16).

5. Système de pile à combustible à oxyde solide selon l'une quelconque des revendications 1 à 3,
dans lequel le gaz résiduel utilisé pour l'échange de chaleur dans l'échangeur thermique eau de condensation/gaz résiduel (26) est un gaz résiduel refoulé de l'anode (14).

6. Système de pile à combustible à oxyde solide selon l'une quelconque des revendications 1 à 5, comprenant en outre:
un radiateur thermique d'eau de condensation (30) prévu sur le passage de circulation d'eau de condensation (20) dans un emplacement qui est en aval de l'humidificateur (28) et en amont du réservoir d'eau de condensation (22) et configuré pour irradier la chaleur de l'eau de condensation.

7. Système de pile à combustible à oxyde solide selon l'une quelconque des revendications 1 à 6, comprenant en outre:
un passage d'air de dérivation (72) configuré pour contourner l'humidificateur (28) et ainsi acheminer l'air non humidifié au reformeur (10); et
un premier commutateur (33) configuré pour effectuer une commutation entre un état dans lequel l'air est fourni au reformeur (10) par l'humidificateur (28) et un état dans lequel l'air est fourni au reformeur (10) par le passage d'air de dérivation (72).

8. Système de pile à combustible à oxyde solide selon l'une quelconque des revendications 1 à 7, comprenant en outre:
une unité de commande (26) configurée pour désactiver la pompe à eau de condensation (24) pendant la mise en route.

9. Système de pile à combustible à oxyde solide selon l'une quelconque des revendications 1 à 8, comprenant en outre:
un dispositif de combustion (38) configuré pour brûler le gaz résiduel de l'anode et un gaz résiduel de la cathode afin de générer un gaz de combustion,
dans lequel le gaz résiduel utilisé pour l'échange de chaleur dans l'échangeur thermique eau de condensation/gaz résiduel (26) est le gaz de combustion refoulé de la chambre de combustion (38).

10. Système de pile à combustible à oxyde solide selon l'une quelconque des revendications 1 à 9,
dans lequel le radiateur thermique à gaz résiduel d'anode (18) est configuré pour échanger de la chaleur entre un milieu de refroidissement liquide et le gaz résiduel d'anode pour irradier de la chaleur à partir du gaz résiduel d'anode, le système de pile à combustible à oxyde solide (500) comprenant en outre:
un détecteur de quantité de stockage d'eau (40) configuré pour détecter une quantité d'eau stockée dans le réservoir d'eau de condensation (22);
un passage de circulation de fluide de refroidissement (78) configuré pour faire circuler le fluide de refroidissement;
une pompe de fluide de refroidissement (42) prévue sur le passage de circulation de fluide de refroidissement (78) et
configuré pour faire circuler le fluide de refroidissement;
un radiateur thermique de fluide de refroidissement (44) prévu sur le passage de circulation de fluide de refroidissement (78) et configuré pour échanger de la chaleur entre le fluide de refroidissement et l'air atmosphérique pour irradier de la chaleur provenant du fluide de refroidissement; et
une unité de commande (36) configurée pour commander une quantité de refoulement de la pompe de fluide de refroidissement (42) sur la base d'un résultat de détection du détecteur de quantité de stockage d'eau (40).

11. Système de pile à combustible à oxyde solide selon l'une quelconque des revendications 1 à 10,
dans lequel le passage de circulation d'eau de condensation (20) comprend:
un passage de dérivation d'échangeur thermique (80) configuré pour faire circuler l'eau de condensation et ainsi éviter que l'eau de condensation ne s'écoule à travers l'échangeur thermique eau de condensation/gaz résiduel (26);
et
un second commutateur (47) configuré pour effectuer une commutation entre la circulation de l'eau de condensation à travers l'échangeur thermique eau de condensation/gaz résiduel (26) et la circulation de l'eau de condensation à travers le passage de dérivation de l'échangeur thermique (80).

12. Système de pile à combustible à oxyde solide selon l'une quelconque des revendications 1 à 10,
dans lequel le passage de circulation d'eau de condensation (20) comprend:
un passage de dérivation d'humidificateur (82) configuré pour faire circuler l'eau de condensation et ainsi éviter que l'eau de condensation ne s'écoule à travers l'humidificateur (28); et
un troisième commutateur (51) configuré pour effectuer une commutation entre la circulation de l'eau de condensation à travers l'humidificateur (28) et la circulation de l'eau de condensation à travers le passage de dérivation de l'humidificateur (82).

13. Système de pile à combustible à oxyde solide selon l'une quelconque des revendications 1 à 11, comprenant en outre:
un détecteur de concentration d'ions (54) configuré pour détecter une concentration en ions de l'eau de condensation stockée dans le réservoir d'eau de condensation (22);
une unité de notification (56); et
une unité de commande (36) configurée pour amener l'unité de notification (56) à émettre une alarme sur la base d'un résultat de détection du détecteur de concentration ionique (54).
